(19) Europäisches Patentamt
European Patent Office
Office européen des brevets

(11) **EP 4 761 402 A1**

(12) **EUROPEAN PATENT APPLICATION**
published in accordance with Art. 153(4) EPC

(43) Date of publication:
**17.06.2026 Bulletin 2026/25**

(21) Application number: **24853303.6**

(22) Date of filing: **27.05.2024**

(51) International Patent Classification (IPC):
*H04W 72/04* ^(2023.01)    *H04L 1/18* ^(2023.01)

(52) Cooperative Patent Classification (CPC):
**H04L 1/18; H04L 5/00; H04W 72/04; H04W 72/044; H04W 74/00**

(86) International application number:
**PCT/CN2024/095550**

(87) International publication number:
**WO 2025/035888 (20.02.2025 Gazette 2025/08)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **11.08.2023 CN 202311017318**

(71) Applicant: **Datang Mobile Communications Equipment Co., Ltd.**
**Beijing 100085 (CN)**

(72) Inventors:
• **SI, Qianqian**
  **Beijing 100085 (CN)**
• **WANG, Junwei**
  **Beijing 100085 (CN)**
• **GAO, Xuejuan**
  **Beijing 100085 (CN)**
• **XING, Yanping**
  **Beijing 100085 (CN)**

(74) Representative: **Studio Torta S.p.A.**
**Via Viotti, 9**
**10121 Torino (IT)**

(54) **PUCCH POWER CONTROL PARAMETER DETERMINATION METHOD AND APPARATUS, AND STORAGE MEDIUM**

(57)    The present application relates to the technical field of communications, and discloses a physical uplink control channel (PUCCH) power control parameter determination method and apparatus, and a storage medium. The specific implementation solution comprises: on the basis of a configuration of a terminal device and a codebook contained in a PUCCH, determining PUCCH power control parameters, wherein the PUCCH power control parameters are used for determining the power of the PUCCH.

determine a PUCCH power control parameter based on a configuration of a terminal and a codebook included in a PUCCH, in which the PUCCH power control parameter is used to determine a power of the PUCCH — 101

FIG. 1

**Description**

**CROSS-REFERENCE TO RELATED APPLICATIONS**

The application is based on and claims the priority of Chinese patent application No. 202311017318.6, filed on August 11, 2023, the entire content of which is incorporated herein by reference.

**TECHNICAL FIELD**

The disclosure relates to a field of communication technology, in particular to a physical uplink control channel (PUCCH) power control parameter determination method, a PUCCH power control parameter determination device and a storage medium.

**BACKGROUND**

New radio (NR) Release 17 (Rel-17) supports hybrid automatic repeat request-acknowledgement (HARQ-ACK) codebook retransmission and semi-persistent scheduling (SPS) delay, but both scenarios involve codebook cascading. When supporting SPS delay, if an HARQ-ACK codebook exists in a target slot, an SPS delay HARQ-ACK codebook will be cascaded after the existing HARQ-ACK codebook in the target slot. Therefore, there are two codebooks cascaded in the target slot: the initial codebook (the existing HARQ-ACK codebook in the target slot) + the SPS delay codebook. When supporting HARQ-ACK codebook retransmission, if there is an existing HARQ-ACK codebook in a target retransmission slot, an HARQ-ACK retransmission codebook will be cascaded after the existing HARQ-ACK codebook in the target retransmission slot. Therefore, there are two codebooks cascaded in the target retransmission slot: the initial codebook (the existing HARQ-ACK codebook in the target retransmission slot) + the HARQ-ACK retransmission codebook.

In related arts, it is unclear how to determine a power of a PUCCH in the case of codebook cascading. Therefore, it is necessary to study how to determine the power of the PUCCH in the case of codebook cascading.

**SUMMARY**

The disclosure provides a PUCCH power control parameter determination method, a PUCCH power control parameter determination device and a storage medium.

According to a first aspect of the disclosure, a PUCCH power control parameter determination method is provided. The method is applied to a terminal, and includes:

determining a PUCCH power control parameter based on a configuration of the terminal and a codebook included in a PUCCH, in which the PUCCH power control parameter is used to determine a power of the PUCCH.

According to a second aspect of the disclosure, a PUCCH power control parameter determination device is provided. The device includes: a memory, a transceiver and a processor.

The memory is configured to store a computer program. The transceiver is configured to transmit and receive data under the control of the processor. The processor is configured to read the computer program from the memory and perform the following operation:

determining a PUCCH power control parameter based on a configuration of a terminal and a codebook included in a PUCCH, in which the PUCCH power control parameter is used to determine a power of the PUCCH.

According to a third aspect of the disclosure, a PUCCH power control parameter determination apparatus is provided. The apparatus includes:

a determining module, configured to determine a PUCCH power control parameter based on a configuration of a terminal and a codebook included in a PUCCH, in which the PUCCH power control parameter is used to determine a power of the PUCCH.

According to a fourth aspect of the disclosure, a processor-readable storage medium is provided. The processor-readable storage medium stores a computer program, and the computer program is used to cause a processor to implement the method described in the embodiments of the first aspect of the disclosure.

The disclosure provides a PUCCH power control parameter determination method, a PUCCH power control parameter determination device and a storage medium. The PUCCH power control parameter is determined based on the configuration of the terminal and the codebook included in the PUCCH, which is used to determine the power of the PUCCH. This addresses the technical problem of determining the power of the PUCCH in the case of codebook cascading in the related arts.

It should be understood that the content described herein is not intended to identify key or essential features of the embodiments of the disclosure, nor is it intended to limit the scope of the disclosure. Other features of the disclosure will become apparent from the following description.

## BRIEF DESCRIPTION OF THE DRAWINGS

The accompanying drawings are for better understanding the solutions and do not constitute as limitations on the disclosure, in which:

FIG. 1 is a flowchart of a PUCCH power control parameter determination method provided by a first embodiment of the disclosure.

FIG. 2 is a flowchart of a PUCCH power control parameter determination method provided by a second embodiment of the disclosure.

FIG. 3 is a flowchart of a PUCCH power control parameter determination method provided by a third embodiment of the disclosure.

FIG. 4 is a flowchart of a PUCCH power control parameter determination method provided by a fourth embodiment of the disclosure.

FIG. 5 is a flowchart of a PUCCH power control parameter determination method provided by a fifth embodiment of the disclosure.

FIG. 6 is a flowchart of a PUCCH power control parameter determination method provided by a sixth embodiment of the disclosure.

FIG. 7 is a flowchart of a PUCCH power control parameter determination method provided by a seventh embodiment of the disclosure.

FIG. 8 is a flowchart of a PUCCH power control parameter determination method provided by an eighth embodiment of the disclosure.

FIG. 9 is a flowchart of a PUCCH power control parameter determination method provided by a ninth embodiment of the disclosure.

FIG. 10 is a flowchart of a PUCCH power control parameter determination method provided by a tenth embodiment of the disclosure.

FIG. 11 is a flowchart of a PUCCH power control parameter determination method provided by an eleventh embodiment of the disclosure.

FIG. 12 is a flowchart of a PUCCH power control parameter determination method provided by a twelfth embodiment of the disclosure.

FIG. 13 is a schematic structural diagram of a PUCCH power control parameter determination device provided by a thirteenth embodiment of the disclosure.

FIG. 14 is a schematic structural diagram of a PUCCH power control parameter determination apparatus provided by a fourteenth embodiment of the disclosure.

## DETAILED DESCRIPTION

In the embodiments of the disclosure, the term "and/or" is used to describe relationships between associated objects, and it indicates three types of relationships. For example, "A and/or B" represents the following three relationships: A exists alone, A and B both exist, and B exists alone. Generally, the character "/" indicates that associated objects before and after the character "/" is in an "or" relationship.

In the embodiments of the disclosure, "a plurality of" refers to two or more, which is similar for other quantifiers.

The technical solutions in the embodiments of the disclosure are clearly and fully described with reference to the accompanying drawings. Obviously, the embodiments described below are only part of the embodiments of the disclosure, not all of them. Based on the embodiments of the disclosure, other embodiments obtained by those skilled in the art without inventive works all fall into the scope of protection of the disclosure.

In the related arts, the NR Rel-17 supports SPS HARQ-ACK delay. Based on K1, an initial slot for SPS HARQ-ACK feedback is determined. In the initial slot for SPS HARQ-ACK, uplink control information (UCI) in Rel-17 is reused. If SPS HARQ-ACK transmission after reusing the UCI uses resources configured via SPS-PUCCH-AN-List-r16 or n1PUCCH-AN, and the resources are invalid, any SPS HARQ-ACK configured with SPS HARQ-ACK delay shall be delayed. Based on the delay condition from the initial slot, remaining slots/sub-slots are checked sequentially until the target slot is found. The delayed SPS HARQ-ACK feedback bits are set after initial HARQ-ACK bits in the target slot. This method is applicable to both Type-1 and Type-2 codebooks.

The NR Rel-17 also supports HARQ-ACK codebook retransmission. That is, retransmission of discarded HARQ-ACKs on PUCCH resources is triggered via downlink control information (DCI). Considering that a target retransmission slot for HARQ-ACK codebook retransmission may include an initial Type-1/Type-2 codebook, an HARQ-ACK retransmission codebook is cascaded after the initial Type-1/Type-2 codebook with the same priority.

If there is an SPS delay HARQ-ACK codebook in the target retransmission slot, the SPS delay HARQ-ACK codebook is set after the HARQ-ACK retransmission codebook and the initial codebook. Therefore, three codebooks are cascaded in the slot in the following order: the initial/new codebook, the HARQ-ACK retransmission codebook and the SPS delay codebook.

In the NR, for PUCCH power control, a power adjustment value is calculated based on the UCI parameter carried by the PUCCH. In detail, for PUCCH format 2/3/4, when a number of bits in the UCI is less than or equal to 11, the power adjustment value is calculated based on $n_{HARQ-ACK}$. However, for PUCCH format 2/3/4, when the number of bits in the UCI is greater than 11, the power adjustment value is calculated based on $O_{ACK}$, in which $n_{HARQ-ACK}$ represents a calculated number of bits in HARQ-ACK, while $O_{ACK}$ represents a number of bits in the HARQ-ACK carried on the PUCCH. However, it is still unclear how to determine the power of the PUCCH in the case of codebook cascading.

Therefore, the disclosure provides a PUCCH power control parameter determination method, a PUCCH power control parameter determination apparatus and a storage medium, to determine a PUCCH power control parameter based on a configuration of a terminal and a codebook included in a PUCCH. The PUCCH power control parameter is used to determine a power of the PUCCH. Thus, the technical problem of determining the power of the PUCCH in the case of codebook cascading in the related arts is addressed.

The method and the apparatus are based on the same inventive concept. Since the principles of the method and the apparatus for solving problems are similar, the implementations of the apparatus and the method can refer to each other, which will not be repeated here.

The technical solutions provided by the embodiments of the disclosure are applicable to various systems, in particular to 5G systems. For example, the applicable systems include a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, an LTE-advanced (LTE-A) system, an universal mobile telecommunication system (UMTS), a worldwide interoperability for microwave access (WiMAX) system, and a 5G NR system. Each of these systems includes a terminal and a network device. The system may also include a core network portion, such as an evolved packet system (EPS), a 5G system (5GS), etc.

The terminal involved in the embodiments of the disclosure may be a device that provides voice and/or data connectivity to users, a handheld device with a wireless connectivity function, or other processing devices connected to a wireless modem. The terminal is referred to by different names in different systems. For example, in the 5GS, the terminal may be referred to as user equipment (UE). The wireless terminal may communicate with one or more core networks (CNs) via a radio access network (RAN). The wireless terminal may be a mobile terminal such as a cell phone (or "cellular" phone), or a computer having a mobile terminal, such as a portable mobile device, a pocket-sized mobile device, a handheld mobile device, a computer-built mobile device or a vehicle-mounted mobile device that is capable of exchanging language and/or data with the RAN. Examples of the wireless terminal include a personal communication service (PCS) phone, a cordless phone, a session initiated protocol (SIP) phone, a wireless local loop (WLL) station and a personal digital assistant (PDA). The wireless terminal may also be referred to as a system, a subscriber unit, a subscriber station, a mobile station, a mobile, a remote station, an access point, a remote terminal, an access terminal, a user terminal, a user agent, or a user device, which can be selected as needed in the embodiments of the disclosure.

The network device involved in the embodiments of the disclosure may be a base station including a plurality of cells providing services to the terminal. Depending on the specific application scenario, the base station may be referred to as an access point, a device in the access network that communicates with the wireless terminal over one or more disk sectors on the radio interface, or by other names. The network device may exchange received radio frames with internet protocol (IP) packets, acting as a router between the wireless terminal and a remaining portion of the access network. The remaining portion of the access network includes an IP communication network. The network device may also be used for management coordination of attributes of the radio interface. For example, the network device involved in the embodiments of the disclosure may be a base transceiver station (BTS) in the GSM system or the CDMA system, a NodeB (NB) in the WCDMA system, an evolutional NB (eNB) in the LTE system, a 5G gNB in a next generation system, a home evolved NB (HeNB), a relay node, a femto, a pico, etc., which can be selected as needed in the embodiments of the disclosure. In some network structures, the network device may include a centralized unit (CU) and a plurality of distributed units (DUs), and the CU and the DUs are geographically separated.

The network device and the terminal each uses one or more antennas for multi-input multi-output (MIMO) transmission. MIMO transmission includes single user-MIMO (SU-MIMO) and multiple user-MIMO (MU-MIMO). Depending on the form of the combination of antennas and the number of antennas included in the combination, MIMO transmission can be categorized as 2D-MIMO, 3D-MIMO, FD-MIMO and massive-MIMO. It may also involve diversity transmission, precoding transmission and beamforming transmission.

The PUCCH power control parameter determination method, the PUCCH power control parameter determination apparatus and the storage medium in the embodiments of the disclosure are described in detail with reference to the accompanying drawings.

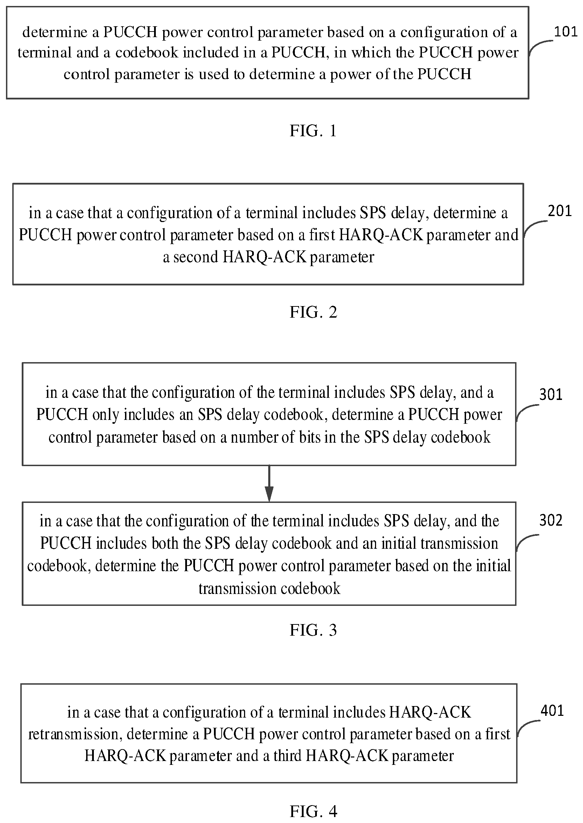

FIG. 1 is a flowchart of a PUCCH power control parameter determination method provided by a first embodiment of the disclosure.

It should be noted that the PUCCH power control parameter determination method of the embodiments of the disclosure is executed by the PUCCH power control parameter determination apparatus provided by the embodiments of the disclosure. The PUCCH power control parameter determination apparatus may be an electronic device or may be configured in the electronic device. The electronic device may be any stationary or mobile computing device capable of performing data processing. For example, the electronic device may be a mobile computing device such as a laptop, a smartphone and a wearable device, a stationary computing device such as a desktop computer, a server, or other types of computing devices, which can be selected as needed in the embodiments of the disclosure.

As illustrated in FIG. 1, the PUCCH power control parameter determination method includes the following step.

At step 101, a PUCCH power control parameter is determined based on a configuration of a terminal and a codebook included in a PUCCH, in which the PUCCH power control parameter is used to determine a power of the PUCCH.

The configuration of the terminal includes at least one of SPS delay or HARQ-ACK retransmission.

The codebook included in the PUCCH includes at least one of an initial transmission codebook, an SPS delay codebook or an HARQ-ACK retransmission codebook.

In some embodiments, the PUCCH power control parameter is determined based on the configuration of the terminal and the codebook included in the PUCCH. In a case that the terminal is configured with SPS delay and/or HARQ-ACK retransmission, in response to an HARQ-ACK carried in a PUCCH format 2/3/4, if a number of bits of UCI feedback is greater than 2 and less than or equal to 11, the PUCCH power control parameter $n_{HARQ-ACK}$ is determined based on the codebook transmission condition of the HARQ-ACK on the PUCCH.

According to the PUCCH power control parameter determination method provided by the disclosure, the PUCCH power control parameter is determined based on the configuration of the terminal and the codebook included in the PUCCH. The PUCCH power control parameter is used to determine the power of the PUCCH. Thus, the technical problem of determining the power of the PUCCH in the case of codebook cascading in the related arts is addressed.

To clearly illustrate how to determine the PUCCH power control parameter if the configuration of the terminal includes SPS delay in the disclosure, the embodiments of the disclosure provide a possible implementation of the PUCCH power control parameter determination method. FIG. 2 is a flowchart of a PUCCH power control parameter determination method provided by a second embodiment of the disclosure.

As illustrated in FIG. 2, the PUCCH power control parameter determination method includes the following step.

At step 201, in a case that a configuration of a terminal includes SPS delay, a PUCCH power control parameter is determined based on a first HARQ-ACK parameter and a second HARQ-ACK parameter.

It should be noted that if the configuration of the terminal includes the SPS delay, the codebook cascading condition of the codebook included in the PUCCH involves both an initial transmission codebook and an SPS delay codebook. The initial transmission codebook is an initial codebook, which refers to the above existing HARQ-ACK codebook bits in the target slot.

If the PUCCH includes both the initial transmission codebook and the SPS delay codebook, it indicates that there are initial HARQ-ACK bits in the target slot, and delayed SPS HARQ-ACK feedback bits are set after the initial HARQ-ACK bits in the target slot.

In addition, other than the above codebook cascading scenarios, the codebook transmission condition of the HARQ-ACK on the PUCCH may also involve the following two scenarios.

Scenario 1. The PUCCH only includes the SPS delay codebook, i.e., there is no inital HARQ-ACK bits in the target slot, and thus only the delayed SPS HARQ-ACK feedback bits are transmitted in the target slot.

Scenario 2. The PUCCH only includes the initial transmission codebook. That is, the target slot only includes the initial HARQ-ACK bits, and there is no delayed SPS HARQ-ACK feedback bits.

In a case that the PUCCH includes the initial transmission codebook, the first HARQ-ACK parameter is determined based on the initial transmission codebook. However, if the PUCCH does not include the initial transmission codebook, the first HARQ-ACK parameter is a first fixed value.

The first fixed value is selected as needed in the embodiments of the disclosure. The first fixed value may be set based on experiences, for example, to 0, or may be dynamically adjusted according to actual application requirements, which can be set as needed in the embodiments of the disclosure.

In a case that the PUCCH includes the SPS delay codebook, the second HARQ-ACK parameter is determined based on a number of bits in the SPS delay codebook. If the PUCCH does not include the SPS delay codebook, the second HARQ-ACK parameter is a second fixed value. For example, if the PUCCH includes the SPS delay codebook, the second HARQ-ACK parameter is the number of bits in the SPS delay codebook.

Similarly, the second fixed value is selected as needed in the embodiments of the disclosure. The second fixed value may be set based on experiences, for example, to 0, or may be dynamically adjusted according to actual application requirements, which can be set as needed in the embodiments of the disclosure.

In some embodiments, when the configuration of the terminal includes SPS delay, a sum of the first HARQ-ACK parameter and the second HARQ-ACK parameter is determined as the PUCCH power control parameter. Based on the descriptions of the values of the first HARQ-ACK parameter and the second HARQ-ACK parameter, it can be seen that for the above codebook cascading scenarios, if the PUCCH includes both the initial transmission codebook and the SPS delay codebook, the first HARQ-ACK parameter is determined based on the initial transmission codebook, the second HARQ-ACK parameter is determined based on the number of bits in the SPS delay codebook, and the PUCCH power control parameter is the sum of the first HARQ-ACK parameter and the second HARQ-ACK parameter. For Scenario 1, since the PUCCH only includes the SPS delay codebook, the first HARQ-ACK parameter is the first fixed value, the second HARQ-ACK parameter is determined based on the number of bits in the SPS delay codebook, and the PUCCH power control parameter is a sum of the first fixed value and the second HARQ-ACK parameter. For Scenario 2, since the PUCCH only includes the initial transmission codebook, the first HARQ-ACK parameter is determined based on the initial transmission codebook, the second HARQ-ACK parameter is the second fixed value, and the PUCCH power control parameter is a sum of the first HARQ-ACK parameter and the second fixed value.

As an example, if the first HARQ-ACK parameter is represented by $n_{HARQ-ACK,0}$, the second HARQ-ACK parameter is represented by $O_{SPS}$, and the PUCCH power control parameter is represented by $n_{HARQ-ACK}$, the power of the PUCCH is determined based on $n_{HARQ-ACK}$, where $n_{HARQ-ACK} = n_{HARQ-ACK,0} + O_{SPS}$. If the PUCCH includes the initial transmission codebook, $n_{HARQ-ACK,0}$ is determined based on the initial transmission codebook, otherwise, $n_{HARQ-ACK,0} = 0$. If the PUCCH includes the SPS delay codebook, $O_{SPS}$ is the number of bits in the SPS delay codebook, otherwise, $O_{SPS} = 0$.

The PUCCH power control parameter determination method provided by the disclosure addresses the technical problem of determining the power of the PUCCH in the case of codebook cascading in the related arts by determining the PUCCH power control parameter based on the first HARQ-ACK parameter and the second HARQ-ACK parameter in the case that the configuration of the terminal includes SPS delay.

The above embodiment describes a possible implementation for determining the PUCCH power control parameter when the configuration of the terminal includes the SPS delay. The embodiment of the disclosure provides another possible implementation for determining a PUCCH power control parameter when a configuration of a terminal includes the SPS delay. FIG. 3 is a flowchart of a PUCCH power control parameter determination method provided by a third embodiment of the disclosure.

As illustrated in FIG. 3, the PUCCH power control parameter determination method includes steps 301-302.

At step 301, in a case that the configuration of the terminal includes SPS delay, and a PUCCH only includes an SPS delay codebook, a PUCCH power control parameter is determined based on a number of bits in the SPS delay codebook.

In some embodiments, when the configuration of the terminal includes the SPS delay, and the PUCCH only includes the SPS delay codebook, the number of bits in the SPS delay codebook is determined as the PUCCH power control parameter. That is, the PUCCH power control parameter is the number of bits in the SPS delay codebook.

It should be noted that in the embodiment of FIG. 2, in a case that the configuration of the terminal includes the SPS delay and the PUCCH only includes the SPS delay codebook, a first HARQ-ACK parameter is a first fixed value, and the PUCCH power control parameter is a sum of the first fixed value and a second HARQ-ACK parameter. The second HARQ-ACK parameter is determined based on the number of bits in the SPS delay codebook. If the first fixed value is 0, the PUCCH power control parameter = 0 + the second HARQ-ACK parameter, i.e., the PUCCH power control parameter = the second HARQ-ACK parameter. Thus, the PUCCH power control parameter is determined based on the number of bits in the SPS delay codebook, which is consistent with the solution provided in this step. If the first fixed value is not 0, the PUCCH power control parameter is the sum of the first fixed value (not 0) and the second HARQ-ACK parameter, which differs from the solution provided in this step.

At step 302, in a case that the configuration of the terminal includes the SPS delay, and the PUCCH includes both the SPS delay codebook and an initial transmission codebook, the PUCCH power control parameter is determined based on the initial transmission codebook.

In some embodiments, when the configuration of the terminal includes the SPS delay and the PUCCH includes both the SPS delay codebook and the initial transmission codebook, the PUCCH power control parameter is determined directly based on the initial transmission codebook without considering the SPS delay codebook.

It should be noted that in the embodiments of the disclosure, when the configuration of the terminal includes the SPS delay and the PUCCH includes both the SPS delay codebook and the initial transmission codebook, in addition to the implementation of directly determining the PUCCH power control parameter based on the initial transmission codebook without considering the SPS delay codebook, it is also possible to adopt the solution provided by the embodiment of FIG. 2. It involves determining the first HARQ-ACK parameter based on the initial transmission codebook, determining the second HARQ-ACK parameter based on the number of bits in the SPS delay codebook, and determining the PUCCH power control parameter based on both the first HARQ-ACK parameter and the second HARQ-ACK parameter.

As an example, if the first HARQ-ACK parameter is represented by $n_{HARQ-ACK,0}$, the second HARQ-ACK parameter is represented by $O_{SPS}$, and the PUCCH power control parameter is represented by $n_{HARQ-ACK}$, $n_{HARQ-ACK}$ is determined based on the codebook included in the PUCCH, and then the power of the PUCCH is determined. In detail, if the PUCCH only includes the SPS delay codebook, the power of the PUCCH is determined by taking $O_{SPS}$ as $n_{HARQ-ACK}$, where $O_{SPS}$ is the number of bits in the SPS delay codebook. If the PUCCH includes both the SPS delay codebook and the initial transmission codebook, $n_{HARQ-ACK}$ is determined based on the initial transmission codebook without considering the SPS delay codebook. Or, $n_{HARQ-ACK,0}$ is determined based on the initial transmission codebook, $O_{SPS}$ is the number of bits in the SPS delay codebook, $n_{HARQ-ACK}= n_{HARQ-ACK,0}+O_{SPS}$, and the power of the PUCCH is determined based on $n_{HARQ-ACK}$.

According to the PUCCH power control parameter determination method provided by the disclosure, when the configuration of the terminal includes the SPS delay and the PUCCH only includes the SPS delay codebook, the PUCCH power control parameter is determined based on the number of bits in the SPS delay codebook. Or, when the configuration of the terminal includes the SPS delay and the PUCCH includes both the SPS delay codebook and the initial transmission codebook, the PUCCH power control parameter is determined based on the initial transmission codebook. This addresses the technical problem of determining the power of the PUCCH in the case of codebook cascading in the related arts.

To clearly illustrate how to determine a PUCCH power control parameter when a configuration of a terminal includes the SPS delay, an example is provided below.

As an example, if it is configured with SPS HARQ-ACK delay, when an HARQ-ACK is carried on a PUCCH format 2/3/4 and a number of bits of UCI feedback is greater than 2 and less than or equal to 11, the PUCCH power control parameter $n_{HARQ-ACK}$ is determined based on the codebook transmission condition of the HARQ-ACK on the PUCCH, and is used to determine the power of the PUCCH. The specific solutions for determining $n_{HARQ-ACK}$ are provided as follows.

Solution 1. The power of the PUCCH is determined by taking $n_{HARQ-ACK,0}+O_{SPS}$ as $n_{HARQ-ACK}$.

If the PUCCH includes the initial transmission codebook, $n_{HARQ-ACK,0}$ is determined based on the initial transmission codebook, otherwise, $n_{HARQ-ACK,0}=0$.

If the PUCCH includes the SPS delay codebook, $O_{SPS}$ is the number of bits in the SPS delay codebook, otherwise, $O_{SPS}=0$.

Solution 2. Firstly, $n_{HARQ-ACK}$ is determined based on the codebook included in the PUCCH, and then the power of the PUCCH is determined.

If the PUCCH only includes the SPS delay codebook, $n_{HARQ-ACK}$ is the number of bits in the SPS delay codebook.

If the PUCCH includes both the SPS delay codebook and the initial transmission codebook,

Solution 2-1: determining $n_{HARQ-ACK}$ based on the initial transmission codebook without considering the SPS delay codebook; or

Solution 2-2: determining $n_{HARQ-ACK,0}$ based on the initial transmission codebook, determining the number of bits in the SPS delay codebook as $O_{SPS}$, taking $n_{HARQ-ACK,0}+O_{SPS}$ as $n_{HARQ-ACK}$, and determining the power of the PUCCH.

Assuming that the UE is configured with SPS HARQ-ACK delay and uses a PUCCH format 2/3/4 for HARQ-ACK transmission, when $O_{ACK}+O_{SR}+O_{CSI}\leq11$, where $O_{ACK}$ represents the number of bits in the HARQ-ACK information, the UE determines $O_{ACK}$, i.e., the PUCCH power control parameter $n_{HARQ-ACK}$ used for determining the transmission power of the PUCCH, based on the two solutions above. When $O_{ACK}+O_{SR}+O_{CS}>11$, the UE determines $O_{ACK}$ for determining the transmission power of the PUCCH based on a total number of bits in the cascaded HARQ-ACK codebooks.

It should be noted that in the above solutions, $n_{HARQ-ACK,0}$ or $n_{HARQ-ACK}$ is determined based on the initial transmission codebook. If the initial transmission codebook is a Type-1 HARQ-ACK codebook, $n_{HARQ-ACK,0}$ or $n_{HARQ-ACK}$ described here can refer to $n_{HARQ-ACK}$ defined in Sections 9.1.2.1 or 16.5.1.1 of 3GPP TS 38.213. If the initial transmission codebook is a Type-2 HARQ-ACK codebook, $n_{HARQ-ACK,0}$ or $n_{HARQ-ACK}$ described here can refer to $n_{HARQ-ACK}$ defined in Sections 9.1.3.1, 9.1.3.3, or 16.5.2.1 of 3GPP TS 38.213.

In conclusion, if it is configured with SPS HARQ-ACK delay, when an HARQ-ACK is carried by a PUCCH format 2/3/4 and a number of bits of UCI feedback is greater than 2 and less than or equal to 11, the PUCCH power control parameter $n_{HARQ-ACK}$ is determined based on the codebook transmission condition of the HARQ-ACK on the PUCCH, which ensures PUCCH transmission performance in such case.

To clearly illustrate how to determine the PUCCH power control parameter when the configuration of the terminal includes HARQ-ACK codebook retransmission in the disclosure, the embodiment of the disclosure provides another possible implementation for determining a PUCCH power control parameter. FIG. 4 is a flowchart of a PUCCH power control parameter determination method provided by a fourth embodiment of the disclosure.

As illustrated in FIG. 4, the PUCCH power control parameter determination method includes step 401.

At step 401, in a case that a configuration of a terminal includes HARQ-ACK retransmission, a PUCCH power control parameter is determined based on a first HARQ-ACK parameter and a third HARQ-ACK parameter.

It should be noted that when the configuration of the terminal includes HARQ-ACK retransmission, the codebook cascading condition of the codebook included in the PUCCH is that both an initial transmission codebook and an HARQ-ACK retransmission codebook are included. The initial transmission codebook is an initial codebook.

When the PUCCH includes both the initial transmission codebook and the HARQ-ACK retransmission codebook, considering that a target retransmission slot for HARQ-ACK codebook retransmission may include one initial Type-1/Type-2 codebook, an HARQ-ACK retransmission codebook is cascaded after the initial Type-1/Type-2 codebook with the same priority.

In addition to the above example cases of codebook cascading, the codebook transmission condition of the HARQ-ACK on the PUCCH may also include the following two cases.

Case 1. The PUCCH only includes the HARQ-ACK retransmission codebook, i.e., there is no initial Type-1/Type-2 codebook in the target retransmission slot for HARQ-ACK codebook retransmission, only the HARQ-ACK retransmission codebook is transmitted in the target retransmission slot.

Case 2. The PUCCH only includes the initial transmission codebook. That is, there is only the initial Type-1/Type-2 codebook in the target retransmission slot with no HARQ-ACK retransmission codebook present.

In a case that the PUCCH includes the initial transmission codebook, the first HARQ-ACK parameter is determined based on the initial transmission codebook. However, if the PUCCH does not include the initial transmission codebook, the first HARQ-ACK parameter is a third fixed value.

The first fixed value is selected as needed in the embodiments of the disclosure. The first fixed value may be set based on experiences, for example, to 0, or may be dynamically adjusted according to actual application requirements, which can be set as needed in the embodiments of the disclosure.

In a case that the PUCCH includes an HARQ-ACK retransmission codebook, the third HARQ-ACK parameter is determined based on the HARQ-ACK retransmission codebook or a number of bits in the HARQ-ACK retransmission codebook. If the PUCCH does not include the HARQ-ACK retransmission codebook, the third HARQ-ACK parameter is the third fixed value. Moreover, if the PUCCH includes the HARQ-ACK retransmission codebook, the third HARQ-ACK parameter is determined based on the HARQ-ACK retransmission codebook, or determined to be the number of bits included in the HARQ-ACK retransmission codebook.

Similarly, the third fixed value is selected as needed in the embodiments of the disclosure. The third fixed value may be set based on experiences, for example, to 0, or may be dynamically adjusted according to actual application requirements, which can be set as needed in the embodiments of the disclosure.

In some embodiments, when the configuration of the terminal includes the HARQ-ACK retransmission codebook, a sum of the first HARQ-ACK parameter and the third HARQ-ACK parameter is determined as the PUCCH power control parameter. Based on the descriptions of the first HARQ-ACK parameter and the third HARQ-ACK parameter, it can be seen that in the case of codebook cascading, since the PUCCH includes both the initial transmission codebook and the HARQ-ACK retransmission codebook, the first HARQ-ACK parameter is determined based on the initial transmission codebook, the third HARQ-ACK parameter is determined based on the number of bits in the HARQ-ACK retransmission codebook, and the PUCCH power control parameter is the sum of the first HARQ-ACK parameter and the third HARQ-ACK parameter. For Case 1 described above, since the PUCCH only includes the HARQ-ACK retransmission codebook, the first HARQ-ACK parameter is the first fixed value, the third HARQ-ACK parameter is determined based on the HARQ-ACK retransmission codebook or the number of bits in the HARQ-ACK retransmission codebook, and the PUCCH power control parameter is a sum of the first fixed value and the third HARQ-ACK parameter. For Case 2 described above, since the PUCCH only includes the initial transmission codebook, the first HARQ-ACK parameter is determined based on the initial transmission codebook, the third HARQ-ACK parameter is the third fixed value, and the PUCCH power control parameter is a sum of the first HARQ-ACK parameter and the third fixed value.

As an example, assuming that the first HARQ-ACK parameter is represented by $n_{HARQ-ACK,0}$, the third HARQ-ACK parameter is represented by $n_{HARQ-ACK,1}$ or $O_{retran}$, and the PUCCH power control parameter is represented by $n_{HARQ-ACK}$, $n_{HARQ-ACK} = n_{HARQ-ACK,0} + n_{HARQ-ACK,1}$, or $n_{HARQ-ACK} = n_{HARQ-ACK,0} + O_{retran}$, and the power of the PUCCH is determined based on $n_{HARQ-ACK}$. If the PUCCH includes an initial transmission codebook, $n_{HARQ-ACK,0}$ is determined based on the initial transmission codebook, otherwise, $n_{HARQ-ACK,0}$ is 0. If the PUCCH includes an HARQ-ACK retransmission codebook, $n_{HARQ-ACK,1}$ is determined based on the HARQ-ACK retransmission codebook or $O_{retran}$ is

**EP 4 761 402 A1**

set to a number of bits in the HARQ-ACK retransmission codebook, otherwise, $n_{\text{HARQ-ACK,1}}$ or $O_{\text{retran}}$=0.

The PUCCH power control parameter determination method provided by the disclosure addresses the technical problem of determining the power of the PUCCH in the case of codebook cascading in the related arts by determining the PUCCH power control parameter based on the first HARQ-ACK parameter and the third HARQ-ACK parameter in the case that the configuration of the terminal includes HARQ-ACK retransmission.

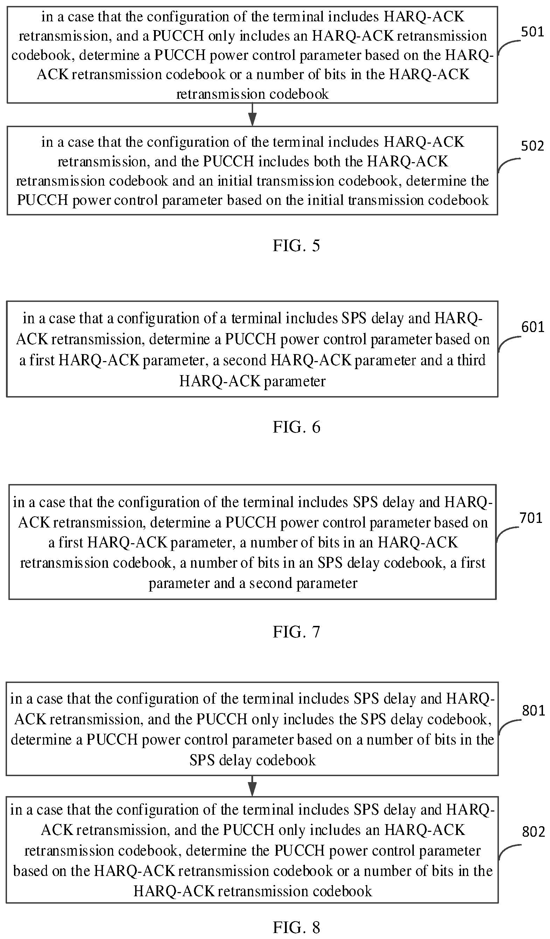

The above embodiment describes a possible implementation for determining the PUCCH power control parameter when the configuration of the terminal includes HARQ-ACK retransmission. The embodiment of the disclosure provides another possible implementation for determining a PUCCH power control parameter when a configuration of a terminal includes HARQ-ACK retransmission. FIG. 5 is a flowchart of a PUCCH power control parameter determination method provided by a fifth embodiment of the disclosure.

As illustrated in FIG. 5, the PUCCH power control parameter determination method includes steps 501-502.

At step 501, in a case that the configuration of the terminal includes HARQ-ACK retransmission, and a PUCCH only includes an HARQ-ACK retransmission codebook, a PUCCH power control parameter is determined based on the HARQ-ACK retransmission codebook or a number of bits in the HARQ-ACK retransmission codebook.

In some embodiments, when the configuration of the terminal includes HARQ-ACK retransmission and the PUCCH only includes the HARQ-ACK retransmission codebook, the PUCCH power control parameter is determined based on the HARQ-ACK retransmission codebook, or the number of bits in the HARQ-ACK retransmission codebook is determined as the PUCCH power control parameter, i.e., the PUCCH power control parameter is the number of bits in the HARQ-ACK retransmission codebook.

It should be noted that in the embodiment of FIG. 4, when the configuration of the terminal includes HARQ-ACK retransmission and the PUCCH only includes the HARQ-ACK retransmission codebook, since the first HARQ-ACK parameter is the first fixed value, the PUCCH power control parameter is the sum of the first fixed value and the third HARQ-ACK parameter. The third HARQ-ACK parameter is determined based on the HARQ-ACK retransmission codebook or the number of bits in the HARQ-ACK retransmission codebook. If the first fixed value is 0, the PUCCH power control parameter=0+the third HARQ-ACK parameter, i.e., the PUCCH power control parameter=the third HARQ-ACK parameter. Thus, the PUCCH power control parameter is determined based on the HARQ-ACK retransmission codebook or the number of bits in the HARQ-ACK retransmission codebook, which is consistent with the solution provided in this step. If the first fixed value is not 0, the PUCCH power control parameter is a sum of the first fixed value (not 0) and the third HARQ-ACK parameter, which differs from the solution provided in this step.

At step 502, in a case that the configuration of the terminal includes HARQ-ACK retransmission, and the PUCCH includes both the HARQ-ACK retransmission codebook and an initial transmission codebook, the PUCCH power control parameter is determined based on the initial transmission codebook.

In some embodiments, when the configuration of the terminal includes HARQ-ACK retransmission and the PUCCH includes both the HARQ-ACK retransmission codebook and the initial transmission codebook, the PUCCH power control parameters is determined directly based on the initial transmission codebook without considering the HARQ-ACK retransmission codebook.

It should be noted that in the embodiments of the disclosure, when the configuration of the terminal includes HARQ-ACK retransmission and the PUCCH includes both the HARQ-ACK retransmission codebook and the initial transmission codebook, in addition to directly determining the PUCCH power control parameter based on the initial transmission codebook without considering the HARQ-ACK retransmission codebook, it is also possible to adopt the solution provided by the embodiment of FIG. 4. It involves determining the first HARQ-ACK parameter based on the initial transmission codebook, determining the third HARQ-ACK parameter based on the HARQ-ACK retransmission codebook or the number of bits in the HARQ-ACK retransmission codebook, and determining the PUCCH power control parameter based on the first HARQ-ACK parameter and the third HARQ-ACK parameter.

As an example, assuming that the first HARQ-ACK parameter is represented by $n_{\text{HARQ-ACK,0}}$, the third HARQ-ACK parameter is represented by $n_{\text{HARQ-ACK,1}}$ or $O_{\text{retran}}$, and the PUCCH power control parameter is represented by $n_{\text{HARQ-ACK}}$, $n_{\text{HARQ-ACK}}$ is determined based on the codebook included in the PUCCH. In detail, if the PUCCH only includes the HARQ-ACK retransmission codebook, $n_{\text{HARQ-ACK,1}}$ or $O_{\text{retran}}$ is taken as $n_{\text{HARQ-ACK}}$, and the power of the PUCCH is determined based on $n_{\text{HARQ-ACK}}$. If $O_{\text{SPS}}$ is taken as $n_{\text{HARQ-ACK}}$, the power of the PUCCH is determined based on $O_{\text{SPS}}$, where $O_{\text{SPS}}$ is the number of bits in the SPS delay codebook. If the PUCCH includes both the HARQ-ACK retransmission codebook and the initial transmission codebook, $n_{\text{HARQ-ACK}}$ is determined based on the initial transmission codebook without considering the HARQ-ACK retransmission codebook. Or, $n_{\text{HARQ-ACK,0}}$ is determined based on the initial transmission codebook, $n_{\text{HARQ-ACK,1}}$ is determined based on the HARQ-ACK retransmission codebook or $O_{\text{retran}}$ is set to the number of bits in the HARQ-ACK retransmission codebook, $n_{\text{HARQ-ACK}}=n_{\text{HARQ-ACK,0}}+n_{\text{HARQ-ACK,1}}$, or $n_{\text{HARQ-ACK}}=n_{\text{HARQ-ACK,0}}+O_{\text{retran}}$, and then the power of the PUCCH is determined based on $n_{\text{HARQ-ACK}}$.

According to the PUCCH power control parameter determination method provided by the disclosure, in the case that the configuration of the terminal includes HARQ-ACK retransmission, and the PUCCH only includes the HARQ-ACK retransmission codebook, the PUCCH power control parameter is determined based on the HARQ-ACK retransmission codebook or the number of bits in the HARQ-ACK retransmission codebook. Or, in the case that the configuration of the terminal includes HARQ-ACK retransmission, and the PUCCH includes both the HARQ-ACK retransmission codebook and the initial transmission codebook, the PUCCH power control parameter is determined based on the initial transmission codebook. The method resolves the technical problem of determining the power of the PUCCH in the case of codebook cascading in the related arts.

To clearly illustrate how to determine a PUCCH power control parameter when a configuration of a terminal includes HARQ-ACK retransmission, an example is provided below.

As an example, if it is configured with HARQ-ACK codebook retransmission, when an HARQ-ACK is carried on a PUCCH format 2/3/4 and a number of bits of UCI feedback is greater than 2 and less than or equal to 11, the PUCCH power control parameter $n_{HARQ-ACK}$ is determined based on the codebook transmission condition of the HARQ-ACK on the PUCCH, and is used to determine the power of the PUCCH. The specific methods for determining $n_{HARQ-ACK}$ are provided as follows.

Solution 1. $n_{HARQ-ACK}=n_{HARQ-ACK,0}+n_{HARQ-ACK,1}$, or $n_{HARQ-ACK}=n_{HARQ-ACK,0}+O_{retran}$, and a power of the PUCCH is determined based on $n_{HARQ-ACK}$.

If the PUCCH includes an initial transmission codebook, $n_{HARQ-ACK,0}$ is determined based on the initial transmission codebook, otherwise, $n_{HARQ-ACK,0}=0$.

If the PUCCH includes an HARQ-ACK retransmission codebook, $n_{HARQ-ACK,1}$ is determined based on the HARQ-ACK retransmission codebook or $O_{retran}$ is set to a number of bits in the HARQ-ACK retransmission codebook, otherwise, $n_{HARQ-ACK,1}$ or $O_{retran}=0$.

Based on Solution 1, $n_{HARQ-ACK}=n_{HARQ-ACK,0}+n_{HARQ-ACK,1}$, or $n_{HARQ-ACK}=n_{HARQ-ACK,0}+O_{retran}$, in which $n_{HARQ-ACK,0}$ is determined based on the initial transmission codebook, $n_{HARQ-ACK,1}$ is determined based on the HARQ-ACK retransmission codebook or $O_{retran}$ is set to a number of bits in the HARQ-ACK retransmission codebook.

Solution 2. $n_{HARQ-ACK}$ is determined based on a codebook included in the PUCCH, and the power of the PUCCH is determined based on $n_{HARQ-ACK}$.

If the PUCCH only includes an HARQ-ACK retransmission codebook, $n_{HARQ-ACK}$ is determined based on the HARQ-ACK retransmission codebook, or $n_{HARQ-ACK}$ is set to the number of bits in the HARQ-ACK retransmission codebook.

If the PUCCH includes the HARQ-ACK retransmission codebook and an initial transmission codebook,

Solution 2-1. $n_{HARQ-ACK}$ is determined based on the initial transmission codebook without considering the HARQ-ACK retransmission codebook.

Solution 2-2. $n_{HARQ-ACK,0}$ is determined based on the initial transmission codebook, $n_{HARQ-ACK,1}$ is determined based on the HARQ-ACK retransmission codebook or $O_{retran}$ is set to a number of bits in the HARQ-ACK retransmission codebook. $n_{HARQ-ACK}=n_{HARQ-ACK,0}+n_{HARQ-ACK,1}$, or $n_{HARQ-ACK}=n_{HARQ-ACK,0}+O_{retran}$, and the power of the PUCCH is determined based on $n_{HARQ-ACK}$.

Assuming that the UE is configured with HARQ-ACK codebook retransmission and uses a PUCCH format 2/3/4 for HARQ-ACK transmission, when $O_{ACK}+O_{SR}+O_{CSI}\leq 11$, where $O_{ACK}$ represents the number of bits in the HARQ-ACK information, the UE determines $O_{ACK}$, i.e., the PUCCH power control parameter $n_{HARQ-ACK}$ used for determining the transmission power of the PUCCH, based on the two solutions above. When $O_{ACK}+O_{SR}+O_{CS}>11$, the UE determines $O_{ACK}$ for determining the transmission power of the PUCCH based on a total number of bits in the cascaded HARQ-ACK codebooks.

It should be noted that in the above solutions, $n_{HARQ-ACK,0}$ or $n_{HARQ-ACK}$ is determined based on the initial transmission codebook, and $n_{HARQ-ACK,1}$ or $n_{HARQ-ACK}$ is determined based on the retransmission codebook. If the initial transmission codebook is a Type-1 HARQ-ACK codebook, $n_{HARQ-ACK,0}$, $n_{HARQ-ACK,1}$ or $n_{HARQ-ACK}$ described here can refer to $n_{HARQ-ACK}$ defined in Sections 9.1.2.1 or 16.5.1.1 of 3GPP TS 38.213. If the initial transmission codebook is a Type-2 HARQ-ACK codebook, $n_{HARQ-ACK,0}$, $n_{HARQ-ACK,1}$ or $n_{HARQ-ACK}$ described here can refer to $n_{HARQ-ACK}$ defined in Sections 9.1.3.1, 9.1.3.3, or 16.5.2.1 of 3GPP TS 38.213.

In conclusion, if it is configured with HARQ-ACK codebook retransmission, when an HARQ-ACK is carried by a PUCCH format 2/3/4 and a number of bits of UCI feedback is greater than 2 and less than or equal to 11, the PUCCH power control parameter $n_{HARQ-ACK}$ is determined based on the codebook transmission condition of the HARQ-ACK on the PUCCH, which ensures PUCCH transmission performance in such case.

To clearly illustrate how to determine the PUCCH power control parameter when the configuration of the terminal includes HARQ-ACK retransmission and SPS delay in the disclosure, the embodiment of the disclosure provides another possible implementation for determining a PUCCH power control parameter. FIG. 6 is a flowchart of a PUCCH power control parameter determination method provided by a sixth embodiment of the disclosure.

As illustrated in FIG. 6, the PUCCH power control parameter determination method includes step 601.

At step 601, in a case that a configuration of a terminal includes SPS delay and HARQ-ACK retransmission, a PUCCH power control parameter is determined based on a first HARQ-ACK parameter, a second HARQ-ACK parameter and a third HARQ-ACK parameter.

It should be noted that when the configuration of the terminal includes SPS delay and HARQ-ACK retransmission, the codebook cascading conditions of the codebook included in the PUCCH include the following four conditions.

Condition 1. The PUCCH includes an initial transmission codebook and an SPS delay codebook. The initial transmission codebook, also known as the initial codebook, refers to initial HARQ-ACK bits present in a target slot.

The PUCCH includes both the initial transmission codebook and the SPS delay codebook, indicating that there are initial HARQ-ACK bits present in the target slot, the delayed SPS HARQ-ACK feedback bits shall be set after the initial HARQ-ACK bits in the target slot.

Condition 2. The PUCCH includes an initial transmission codebook and an HARQ-ACK retransmission codebook. The initial transmission codebook is also known as the initial codebook.

The PUCCH includes both the initial transmission codebook and the HARQ-ACK retransmission codebook, indicating that considering that there may be an initial Type-1/Type-2 codebook in a target retransmission slot where the HARQ-ACK retransmission codebook is located, an HARQ-ACK retransmission codebook is cascaded after the initial Type-1/Type-2 codebook with the same priority.

It should be noted that in Condition 2, there is no SPS delay HARQ-ACK codebook in the target retransmission slot.

Condition 3. The PUCCH includes an initial transmission codebook, an HARQ-ACK retransmission codebook and an SPS delay codebook. The initial transmission codebook is also known as the initial codebook.

The PUCCH includes the initial transmission codebook, the HARQ-ACK retransmission codebook and the SPS delay codebook, indicating that considering that there may be an initial Type-1/Type-2 codebook in the target retransmission slot where the HARQ-ACK retransmission codebook is located, the HARQ-ACK retransmission codebook is cascaded after the initial Type-1 or Type-2 codebook of the same priority. However, since there is the SPS delay HARQ-ACK codebook in target retransmission slot, the SPS delay HARQ-ACK codebook shall be set after the HARQ-ACK retransmission codebook and the initial codebook. Thus, three codebooks are cascaded in the slot in the following order: the initial/new codebook, the HARQ-ACK retransmission codebook, the SPS delay codebook.

Condition 4. The PUCCH includes an HARQ-ACK retransmission codebook and an SPS delay codebook. That is, there is no initial Type-1/Type-2 codebook in the target retransmission slot where HARQ-ACK retransmission codebook is located. The HARQ-ACK retransmission codebook is transmitted directly in the target retransmission slot. In this case, since the SPS delay HARQ-ACK codebook also exists in the target retransmission slot, the SPS delay HARQ-ACK codebook shall be set after the HARQ-ACK retransmission codebook.

In addition to the four codebook cascading conditions described above, the HARQ-ACK codebook transmission condition on the PUCCH may also involve the following three conditions.

Condition 5. The PUCCH only includes an initial transmission codebook. That is, only initial HARQ-ACK bits exit in a target slot, with no SPS delay HARQ-ACK codebook and/or HARQ-ACK retransmission codebook present in the target slot.

Condition 6. The PUCCH only includes an SPS delay codebook. That is, no initial HARQ-ACK bits exit in the target slot, and only delayed SPS HARQ-ACK feedback bits are transmitted in the target slot.

Condition 7. The PUCCH only includes an HARQ-ACK retransmission codebook. That is, there is no initial Type-1/Type-2 codebook or any SPS delay HARQ-ACK codebook in a target retransmission slot where the HARQ-ACK retransmission codebook is located, and only the HARQ-ACK retransmission codebook is transmitted in the target retransmission slot.

If the PUCCH includes an initial transmission codebook, the first HARQ-ACK parameter is determined based on the initial transmission codebook. However, if the PUCCH does not include the initial transmission codebook, the first HARQ-ACK parameter is set to a first fixed value.

The value of the first fixed value is selected as needed in the embodiments of the disclosure. The first fixed value may be set based on experiences, for example, to 0, or may be dynamically adjusted according to actual application requirements, which can be set as needed in the embodiments of the disclosure.

In a case that the PUCCH includes an SPS delay codebook, the second HARQ-ACK parameter is determined based on a number of bits in the SPS delay codebook. If the PUCCH does not include the SPS delay codebook, the second HARQ-ACK parameter is set to a second fixed value.

Similarly, the second fixed value is selected as needed in the embodiments of the disclosure. The second fixed value may be set based on experiences, for example, to 0, or may be dynamically adjusted according to actual application requirements, which can be set as needed in the embodiments of the disclosure.

In a case that the PUCCH includes an HARQ-ACK retransmission codebook, the third HARQ-ACK parameter is determined based on the HARQ-ACK retransmission codebook or a number of bits in the HARQ-ACK retransmission codebook. If the PUCCH does not include the HARQ-ACK retransmission codebook, the third HARQ-ACK parameter is set to a third fixed value.

Similarly, the third fixed value is selected as needed in the embodiments of the disclosure. The third fixed value may be set based on experiences, for example, to 0, or may be dynamically adjusted according to actual application requirements, which can be set as needed in the embodiments of the disclosure.

In some embodiments, when the configuration of the terminal includes SPS delay and HARQ-ACK retransmission, a sum of the first HARQ-ACK parameter, the second HARQ-ACK parameter, and the third HARQ-ACK parameter is determined as the PUCCH power control parameter. Thus, based on the descriptions of the first HARQ-ACK parameter, the second HARQ-ACK parameter and the third HARQ-ACK parameter described above, it can be seen that for Condition 1, since the PUCCH includes both the initial transmission codebook and the SPS delay codebook, the first HARQ-ACK parameter is determined based on the initial transmission codebook, the second HARQ-ACK parameter is determined based on a number of bits in the SPS delay codebook, and the third HARQ-ACK parameter is set to the third fixed value. Thus, the PUCCH power control parameter is a sum of the first HARQ-ACK parameter, the second HARQ-ACK parameter and the third fixed value. For Condition 2, since the PUCCH includes both the initial transmission codebook and the HARQ-ACK retransmission codebook, the first HARQ-ACK parameter is determined based on the initial transmission codebook, the second HARQ-ACK parameter is set to the second fixed value, and the third HARQ-ACK parameter is determined based on the HARQ-ACK retransmission codebook or a number of bits in the HARQ-ACK retransmission codebook. Thus, the PUCCH power control parameter is a sum of the first HARQ-ACK parameter, the second fixed value and the third HARQ-ACK parameter. For Condition 3, since the PUCCH includes the initial transmission codebook, the HARQ-ACK retransmission codebook and the SPS delay codebook, the first HARQ-ACK parameter is determined based on the initial transmission codebook, the second HARQ-ACK parameter is determined based on a number of bits in the SPS delay codebook, and the third HARQ-ACK parameter is determined based on the HARQ-ACK retransmission codebook or a number of bits in the HARQ-ACK retransmission codebook. Thus, the PUCCH power control parameter is a sum of the first HARQ-ACK parameter, the second HARQ-ACK parameter and the third HARQ-ACK parameter. For Condition 4, since the PUCCH includes both the HARQ-ACK retransmission codebook and the SPS delay codebook, the first HARQ-ACK parameter is set to the first fixed value, the second HARQ-ACK parameter is determined based on a number of bits in the SPS delay codebook, and the third HARQ-ACK parameter is determined based on the HARQ-ACK retransmission codebook or a number of bits in the HARQ-ACK retransmission codebook. Thus, the PUCCH power control parameter is a sum of the first fixed value, the second HARQ-ACK parameter and the third HARQ-ACK parameter. For Condition 5, since the PUCCH only includes the initial transmission codebook, the first HARQ-ACK parameter is determined based on the initial transmission codebook, the second HARQ-ACK parameter is set to the second fixed value, and the third HARQ-ACK parameter is set to the third fixed value. Thus, the PUCCH power control parameter is a sum of the first HARQ-ACK parameter, the second fixed value and the third fixed value. For Condition 6, Since the PUCCH only includes the SPS delay codebook, the first HARQ-ACK parameter is set to the first fixed value, the second HARQ-ACK parameter is determined based on a number of bits in the SPS delay codebook, and the third HARQ-ACK parameter is set to the third fixed value. Thus, the PUCCH power control parameter is a sum of the first fixed value, the second HARQ-ACK parameter and the third fixed value. For Condition 7, since the PUCCH only includes the HARQ-ACK retransmission codebook, the first HARQ-ACK parameter is set to the first fixed value, the second HARQ-ACK parameter is set to the second fixed value, and the third HARQ-ACK parameter is determined based on the HARQ-ACK retransmission codebook or a number of bits in the HARQ-ACK retransmission codebook. Thus, the PUCCH power control parameter is a sum of the first fixed value, the second fixed value and the third HARQ-ACK parameter.

As an example, assuming that the first HARQ-ACK parameter is represented by $n_{HARQ-ACK,0}$, the second HARQ-ACK parameter is represented by $O_{SPS}$, the third HARQ-ACK parameter is represented by $n_{HARQ-ACK,1}$ or $O_{retran}$, and the PUCCH power control parameter is represented by $n_{HARQ-ACK}$, $n_{HARQ-ACK} = n_{HARQ-ACK,0} + O_{SPS} + n_{HARQ-ACK,1}$, or $n_{HARQ-ACK} = n_{HARQ-ACK,0} + O_{SPS} + O_{retran}$, and the power of the PUCCH is determined based on $n_{HARQ-ACK}$. If the PUCCH includes an initial transmission codebook, $n_{HARQ-ACK,0}$ is determined based on the initial transmission codebook, otherwise, $n_{HARQ-ACK,0}$ is 0. If the PUCCH includes an HARQ-ACK retransmission codebook, $n_{HARQ-ACK,1}$ is determined based on the HARQ-ACK retransmission codebook or $O_{retran}$ is set to a number of bits in the HARQ-ACK retransmission codebook, otherwise, $n_{HARQ-ACK,1}$ or $O_{retran} = 0$. If the PUCCH includes an SPS delay codebook, $O_{SPS}$ is a number of bits in the SPS delay codebook, otherwise, $O_{SPS} = 0$.

The disclosure provides a PUCCH power control parameter determination method. In a case that the configuration of the terminal includes SPS delay and HARQ-ACK retransmission, the PUCCH power control parameter is determined based on the first HARQ-ACK parameter, the second HARQ-ACK parameter and the third HARQ-ACK parameter. Thus, the technical problem of determining the power of the PUCCH in the case of codebook cascading in the related arts is addressed.

The above embodiment describes a possible implementation for determining the PUCCH power control parameter when the configuration of the terminal includes SPS delay and HARQ-ACK retransmission. The embodiment of the disclosure provides another possible implementation for determining a PUCCH power control parameter when a configuration of a terminal includes SPS delay and HARQ-ACK retransmission. FIG. 7 is a flowchart of a PUCCH power control parameter determination method provided by a seventh embodiment of the disclosure.

As illustrated in FIG. 7, the PUCCH power control parameter determination method includes step 701.

At step 701, in a case that the configuration of the terminal includes SPS delay and HARQ-ACK retransmission, a PUCCH power control parameter is determined based on a first HARQ-ACK parameter, a number of bits in an HARQ-ACK retransmission codebook, a number of bits in an SPS delay codebook, a first parameter and a second parameter.

In a case that a PUCCH includes an initial transmission codebook, the first HARQ-ACK parameter is determined based on the initial transmission codebook.

The first parameter and the second parameter are either predefined or configured by a high-layer parameter. Optionally, the values of the first parameter and the second parameter are within the range between 0 and 1 (including the values of 0 and 1).

In some embodiments, when the configuration of the terminal includes SPS delay and HARQ-ACK retransmission, a product of a number of bits in an HARQ-ACK retransmission codebook and the first parameter may be determined as a first intermediate value, and a product of a number of bits in an SPS delay codebook and the second parameter may be determined as a second intermediate value. Thus, a sum of the first HARQ-ACK parameter, the first intermediate value and the second intermediate value is determined as the PUCCH power control parameter.

As an example, assuming that the first HARQ-ACK parameter is represented by $n_{\text{HARQ-ACK},0}$, the number of bits in the HARQ-ACK retransmission codebook is represented by $O_{\text{retran}}$, the number of bits in the SPS delay codebook is represented by $O_{\text{SPS}}$, the first parameter is represented by $\alpha$, and the second parameter is represented by $\beta$. The PUCCH power control parameter $n_{\text{HARQ-ACK}}$ is calculated by the following equation:

$$n_{\text{HARQ-ACK}} = n_{\text{HARQ-ACK},0} + \alpha * O_{\text{retran}} + \beta * O_{\text{SPS}}.$$

In a case that a PUCCH includes an initial transmission codebook, $n_{\text{HARQ-ACK},0}$ is determined based on the initial transmission codebook included in the PUCCH. Moreover, $\alpha$ and $\beta$ are parameters greater than or equal to 0 and less than or equal to 1. $\alpha$ and $\beta$ are predefined or configured by a high-layer parameter.

The PUCCH power control parameter determination method provided by the disclosure addresses the technical problem of determining the power of the PUCCH in the case of codebook cascading in the related arts by determining the PUCCH power control parameter based on the first HARQ-ACK parameter, the number of bits in the HARQ-ACK retransmission codebook, the number of bits in the SPS delay codebook, the first parameter and the second parameter in the case that the configuration of the terminal includes SPS delay and HARQ-ACK retransmission.

FIG. 8 describes a possible implementation method for determining a PUCCH power control parameter in a case that a configuration of a terminal includes SPS delay and HARQ-ACK retransmission, and a PUCCH only includes an SPS delay codebook or an HARQ-ACK retransmission codebook.

FIG. 8 is a flowchart of a PUCCH power control parameter determination method provided by an eighth embodiment of the disclosure.

As illustrated in FIG. 8, the PUCCH power control parameter determination method includes steps 801-802.

At step 801, in a case that the configuration of the terminal includes SPS delay and HARQ-ACK retransmission, and the PUCCH only includes the SPS delay codebook, a PUCCH power control parameter is determined based on a number of bits in the SPS delay codebook.

In some embodiments, when the configuration of the terminal includes SPS delay and HARQ-ACK retransmission, and the PUCCH only includes the SPS delay codebook, the number of bits in the SPS delay codebook is determined as the PUCCH power control parameter. That is, the PUCCH power control parameter is the number of bits in the SPS delay codebook.

It should be noted that in the embodiment of FIG. 6, when the configuration of the terminal includes SPS delay and HARQ-ACK retransmission, and the PUCCH only includes the SPS delay codebook, the first HARQ-ACK parameter is set to the first fixed value, the second HARQ-ACK parameter is determined based on the number of bits in the SPS delay codebook, the third HARQ-ACK parameter is set to the third fixed value, and the PUCCH power control parameter is the sum of the first fixed value, the second HARQ-ACK parameter and the third fixed value. If both the first fixed value and the third fixed value are 0, the PUCCH power control parameter=0+the second HARQ-ACK parameter+0, i.e., the PUCCH power control parameter=the second HARQ-ACK parameter. That is, the PUCCH power control parameter is determined based on the number of bits in the SPS delay codebook, which is consistent with the solution provided in this step. The first fixed value and/or the third fixed value may not be 0, then the PUCCH power control parameter is a sum of the first fixed value (not 0), the second HARQ-ACK parameter and the third fixed value (not 0), which differs from the solution provided in this step.

At step 802, in a case that the configuration of the terminal includes SPS delay and HARQ-ACK retransmission, and the PUCCH only includes an HARQ-ACK retransmission codebook, the PUCCH power control parameter is determined based on the HARQ-ACK retransmission codebook or a number of bits in the HARQ-ACK retransmission codebook.

In some embodiments, when the configuration of the terminal includes SPS delay and HARQ-ACK retransmission, and the PUCCH only includes the HARQ-ACK retransmission codebook, the PUCCH power control parameter may be determined based on the HARQ-ACK retransmission codebook, or the number of bits in the HARQ-ACK retransmission codebook may be determined as the PUCCH power control parameter, i.e., the PUCCH power control parameter=the number of bits in the HARQ-ACK retransmission codebook.

It should be noted that in the embodiment of FIG. 6, in a case that the configuration of the terminal includes SPS delay and HARQ-ACK retransmission and the PUCCH only includes the HARQ-ACK retransmission codebook, the first HARQ-ACK parameter is set to the first fixed value, the second HARQ-ACK parameter is set to the second fixed value, the third HARQ-ACK parameter is determined based on the HARQ-ACK retransmission codebook or the number of bits in the HARQ-ACK retransmission codebook. Thus, the PUCCH power control parameter is the sum of the first fixed value, the second fixed value and the third HARQ-ACK parameter. If both the first fixed value and the second fixed value are 0, the PUCCH power control parameter=0+0+the third HARQ-ACK parameter, i.e., the PUCCH power control parameter=the third HARQ-ACK parameter. That is, the PUCCH power control parameter is determined based on the HARQ-ACK retransmission codebook or the number of bits in the HARQ-ACK retransmission codebook, which is consistent with the solution provided in this step. The first fixed value and/or the second fixed value may not be 0, then the PUCCH power control parameter is the sum of the first fixed value (not 0), the second fixed value (not 0) and the third HARQ-ACK parameter, which differs from the solution provided in this step.

The PUCCH power control parameter determination method provided by the disclosure addresses the technical problem of determining the power of the PUCCH in the case of codebook cascading in the related arts. It determines the PUCCH power control parameter based on the number of bits in the SPS delay codebook in the case that the configuration of the terminal includes SPS delay and HARQ-ACK retransmission, and the PUCCH only includes the SPS delay codebook. Or, in the case that the configuration of the terminal includes SPS delay and HARQ-ACK retransmission, and the PUCCH only includes the HARQ-ACK retransmission codebook, it determines the PUCCH power control parameter based on the HARQ-ACK retransmission codebook or the number of bits in the HARQ-ACK retransmission codebook.

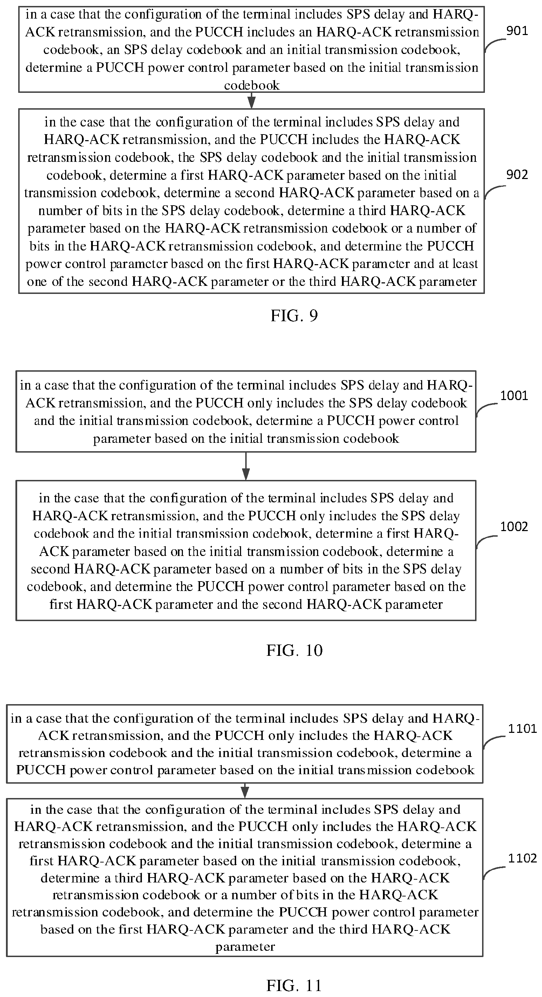

FIG. 9 describes a possible implementation method for determining a PUCCH power control parameter when a configuration of a terminal includes SPS delay and HARQ-ACK retransmission, and a PUCCH includes an HARQ-ACK retransmission codebook, an SPS delay codebook and an initial transmission codebook.

FIG. 9 is a flowchart of a PUCCH power control parameter determination method provided by a ninth embodiment of the disclosure.

As illustrated in FIG. 9, the PUCCH power control parameter determination method includes the following steps.

At step 901, in a case that the configuration of the terminal includes SPS delay and HARQ-ACK retransmission, and the PUCCH includes an HARQ-ACK retransmission codebook, an SPS delay codebook and an initial transmission codebook, a PUCCH power control parameter is determined based on the initial transmission codebook.

In some embodiments, when the configuration of the terminal includes SPS delay and HARQ-ACK retransmission, and the PUCCH includes the HARQ-ACK retransmission codebook, the SPS delay codebook and the initial transmission codebook, the PUCCH power control parameter is determined directly based on the initial transmission codebook without considering the HARQ-ACK retransmission codebook and the SPS delay codebook.

At step 902, in the case that the configuration of the terminal includes SPS delay and HARQ-ACK retransmission, and the PUCCH includes the HARQ-ACK retransmission codebook, the SPS delay codebook and the initial transmission codebook, a first HARQ-ACK parameter is determined based on the initial transmission codebook, a second HARQ-ACK parameter is determined based on a number of bits in the SPS delay codebook, a third HARQ-ACK parameter is determined based on the HARQ-ACK retransmission codebook or a number of bits in the HARQ-ACK retransmission codebook, and the PUCCH power control parameter is determined based on the first HARQ-ACK parameter and at least one of the second HARQ-ACK parameter or the third HARQ-ACK parameter.

It should be noted that the process of determining the PUCCH power control parameter based on the first HARQ-ACK parameter and at least one of the second HARQ-ACK parameter or the third HARQ-ACK parameter includes the following three situations.

Situation 1. The PUCCH power control parameter is determined based on the third HARQ-ACK parameter and the first HARQ-ACK parameter.

In some embodiments, the third HARQ-ACK parameter is determined based on the HARQ-ACK retransmission codebook, or the number of bits in the HARQ-ACK retransmission codebook is determined as the third HARQ-ACK parameter, i.e., the third HARQ-ACK parameter=the number of bits in the HARQ-ACK retransmission codebook, and the first HARQ-ACK parameter is determined based on the initial transmission codebook, then a sum of the third HARQ-ACK parameter and the first HARQ-ACK parameter is determined as the PUCCH power control parameter.

Situation 2. The PUCCH power control parameter is determined based on the second HARQ-ACK parameter and the first HARQ-ACK parameter.

In some embodiments, the number of bits in the SPS delay codebook is determined as the second HARQ-ACK parameter, i.e., the second HARQ-ACK parameter=the number of bits in the SPS delay codebook, the first HARQ-ACK parameter is determined based on the initial transmission codebook, then a sum of the second HARQ-ACK parameter and the first HARQ-ACK parameter is determined as the PUCCH power control parameter.

Situation 3. The PUCCH power control parameter is determined based on the first HARQ-ACK parameter, the second HARQ-ACK parameter and the third HARQ-ACK parameter.

In some embodiments, the third HARQ-ACK parameter is determined based on the HARQ-ACK retransmission codebook, or the number of bits in the HARQ-ACK retransmission codebook is determined as the third HARQ-ACK parameter, i.e., the third HARQ-ACK parameter=the number of bits in the HARQ-ACK retransmission codebook. The number of bits in the SPS delay codebook is determined as the second HARQ-ACK parameter, i.e., the second HARQ-ACK parameter=the number of bits in the SPS delay codebook, and the first HARQ-ACK parameter is determined based on the initial transmission codebook, then a sum of the first HARQ-ACK parameter, the second HARQ-ACK parameter and the third HARQ-ACK parameter is determined as the PUCCH power control parameter.

It should be noted that the solution provided in the above Situation 3 is consistent with the solution provided in the case that the configuration of the terminal in the embodiment of FIG. 6 includes SPS delay and HARQ-ACK retransmission, and the PUCCH includes the initial transmission codebook, the HARQ-ACK retransmission codebook and the SPS delay codebook. However, the solutions in Situation 1 and Situation 2 differ from the solution provided in the embodiment of FIG. 6 in the case that the configuration of the terminal includes SPS delay and HARQ-ACK retransmission, and the PUCCH includes the initial transmission codebook, the HARQ-ACK retransmission codebook and the SPS delay codebook.

The PUCCH power control parameter determination method provided in the disclosure determines the PUCCH power control parameter based on the initial transmission codebook in the case that the configuration of the terminal includes SPS delay and HARQ-ACK retransmission and the PUCCH includes the HARQ-ACK retransmission codebook, the SPS delay codebook and the initial transmission codebook. Or, in the case that the configuration of the terminal includes SPS delay and HARQ-ACK retransmission, and the PUCCH includes HARQ-ACK retransmission codebook, the SPS delay codebook and the initial transmission codebook, it determines the first HARQ-ACK parameter based on the initial transmission codebook, determines the second HARQ-ACK parameter based on the number of bits in the SPS delay codebook, determines the third HARQ-ACK parameter based on the HARQ-ACK retransmission codebook or the number of bits in the HARQ-ACK retransmission codebook, and then determines the PUCCH power control parameter based on the first HARQ-ACK parameter and at least one of the second HARQ-ACK parameter and the third HARQ-ACK parameter. This addresses the technical problem of determining the power of the PUCCH in the case of codebook cascading in the related arts.

FIG. 10 illustrates a possible implementation for determining a PUCCH power control parameter in a case that a configuration of a terminal includes SPS delay and HARQ-ACK retransmission, and a PUCCH only includes an SPS delay codebook and an initial transmission codebook.

FIG. 10 is a flowchart of a PUCCH power control parameter determination method provided by a tenth embodiment of the disclosure.

As illustrated in FIG. 10, the PUCCH power control parameter determination method includes the following steps.

At step 1001, in a case that the configuration of the terminal includes SPS delay and HARQ-ACK retransmission, and the PUCCH only includes the SPS delay codebook and the initial transmission codebook, a PUCCH power control parameter is determined based on the initial transmission codebook.

In some embodiments, when the configuration of the terminal includes SPS delay and HARQ-ACK retransmission, and the PUCCH only includes the SPS delay codebook and the initial transmission codebook, the PUCCH power control parameter is determined directly based on the initial transmission codebook without considering the SPS delay codebook.

At step 1002, in the case that the configuration of the terminal includes SPS delay and HARQ-ACK retransmission, and the PUCCH only includes the SPS delay codebook and the initial transmission codebook, a first HARQ-ACK parameter is determined based on the initial transmission codebook, a second HARQ-ACK parameter is determined based on a number of bits in the SPS delay codebook, and the PUCCH power control parameter is determined based on the first HARQ-ACK parameter and the second HARQ-ACK parameter.

In some embodiments, when the configuration of the terminal includes SPS delay and HARQ-ACK retransmission, and the PUCCH only includes the SPS delay codebook and the initial transmission codebook, the first HARQ-ACK parameter is determined based on the initial transmission codebook, the number of bits in the SPS delay codebook is determined as the second HARQ-ACK parameter, i.e., the second HARQ-ACK parameter=the number of bits in the SPS delay codebook, then a sum of the first HARQ-ACK parameter and the second HARQ-ACK parameter is determined as the PUCCH power control parameter.

It should be noted that in the embodiment of FIG. 6, in the case that the configuration of the terminal includes SPS delay and HARQ-ACK retransmission, and the PUCCH only includes the SPS delay codebook and the initial transmission codebook, the first HARQ-ACK parameter is determined based on the initial transmission codebook, the second HARQ-ACK parameter is determined based on the number of bits in the SPS delay codebook, the third HARQ-ACK parameter is set to the third fixed value, and the PUCCH power control parameter is the sum of the first HARQ-ACK parameter, the second HARQ-ACK parameter and the third fixed value. If the third fixed value is 0, the PUCCH power control parameter = $n_{HARQ-ACK,0} + O_{SPS} + 0$, which is consistent with the solution provided in this step. If the third fixed value is not 0, the PUCCH power control parameter is the sum of the first HARQ-ACK parameter, the second HARQ-ACK parameter and the third fixed value (not 0), which differs from the solution provided in this step.

The PUCCH power control parameter determination method provided by the disclosure addresses the technical problem of determining the PUCCH power in the case of codebook cascading in the related art. It determines the PUCCH power control parameter based on the initial transmission codebook in the case that the configuration of the terminal includes SPS delay and HARQ-ACK retransmission, and the PUCCH only includes the SPS delay codebook and the initial transmission codebook. Or, in the case that the configuration of the terminal includes SPS delay and HARQ-ACK retransmission, and the PUCCH only includes the SPS delay codebook and the initial transmission codebook, it determines the first HARQ-ACK parameter based on the initial transmission codebook, determines the second HARQ-ACK parameter based on the number of bits in the SPS delay codebook, and determines the PUCCH power control parameter based on the first HARQ-ACK parameter and the second HARQ-ACK parameter.

FIG. 11 illustrates a possible implementation for determining a PUCCH power control parameter in a case that a configuration of a terminal includes SPS delay and HARQ-ACK retransmission, and a PUCCH only includes an HARQ-ACK retransmission codebook and an initial transmission codebook.

FIG. 11 is a flowchart of a PUCCH power control parameter determination method provided by an eleventh embodiment of the disclosure.

As illustrated in FIG. 11, the PUCCH power control parameter determination method includes the following steps.

At step 1101, in a case that the configuration of the terminal includes SPS delay and HARQ-ACK retransmission, and the PUCCH only includes the HARQ-ACK retransmission codebook and the initial transmission codebook, a PUCCH power control parameter is determined based on the initial transmission codebook.

In some embodiments, when the configuration of the terminal includes SPS delay and HARQ-ACK retransmission, and the PUCCH includes both the HARQ-ACK retransmission codebook and the initial transmission codebook, the PUCCH power control parameter is determined directly based on the initial transmission codebook without considering the HARQ-ACK retransmission codebook.

At step 1102, in the case that the configuration of the terminal includes SPS delay and HARQ-ACK retransmission, and the PUCCH only includes the HARQ-ACK retransmission codebook and the initial transmission codebook, a first HARQ-ACK parameter is determined based on the initial transmission codebook, a third HARQ-ACK parameter is determined based on the HARQ-ACK retransmission codebook or a number of bits in the HARQ-ACK retransmission codebook, and the PUCCH power control parameter is determined based on the first HARQ-ACK parameter and the third HARQ-ACK parameter.

In some embodiments, in the case that the configuration of the terminal includes SPS delay and HARQ-ACK retransmission, and the PUCCH only includes the HARQ-ACK retransmission codebook and the initial transmission codebook, the first HARQ-ACK parameter is determined based on the initial transmission codebook, the third HARQ-ACK parameter is determined based on the HARQ-ACK retransmission codebook, or the number of bits in the HARQ-ACK retransmission codebook is determined as the third HARQ-ACK parameter, and a sum of the first HARQ-ACK parameter and the third HARQ-ACK parameter is determined as the PUCCH power control parameter.

It should be noted that in the embodiment of FIG. 6, in the case that the configuration of the terminal includes SPS delay and HARQ-ACK retransmission, and the PUCCH only includes the HARQ-ACK retransmission codebook and the initial transmission codebook, the first HARQ-ACK parameter is determined based on the initial transmission codebook, the second HARQ-ACK parameter is set to the second fixed value, the third HARQ-ACK parameter is determined based on the HARQ-ACK retransmission codebook or the number of bits in the HARQ-ACK retransmission codebook, and the PUCCH power control parameter is the sum of the first HARQ-ACK parameter, the second fixed value and the third HARQ-ACK parameter. If the second fixed value is 0, the PUCCH power control parameter $= n_{HARQ-ACK,0} + 0 + n_{HARQ-ACK,1}$, or $n_{HARQ-ACK} = n_{HARQ\_ACK,0} + 0 + O_{retran}$, which is consistent with the solution provided in this step. If the second fixed value is not 0, the PUCCH power control parameter is a sum of the first HARQ-ACK parameter, the second fixed value (not 0) and the third HARQ-ACK parameter, which differs from the solution provided in this step.

The PUCCH power control parameter determination method provided by the disclosure addresses the technical problem of determining the power of the PUCCH in the case of codebook cascading in the related arts. It determines the PUCCH power control parameter based on the initial transmission codebook in the case that the configuration of the terminal includes SPS delay and HARQ-ACK retransmission, and the PUCCH only includes the HARQ-ACK retransmission codebook and the initial transmission codebook. Or, in the case that the configuration of the terminal includes SPS delay and HARQ-ACK retransmission, and the PUCCH only includes the HARQ-ACK retransmission codebook and the initial transmission codebook, it determines the first HARQ-ACK parameter based on the initial transmission codebook, determines the third HARQ-ACK parameter based on the HARQ-ACK retransmission codebook or the number of bits in the HARQ-ACK retransmission codebook, and determines the PUCCH power control parameter based on the first HARQ-ACK parameter and the third HARQ-ACK parameter.

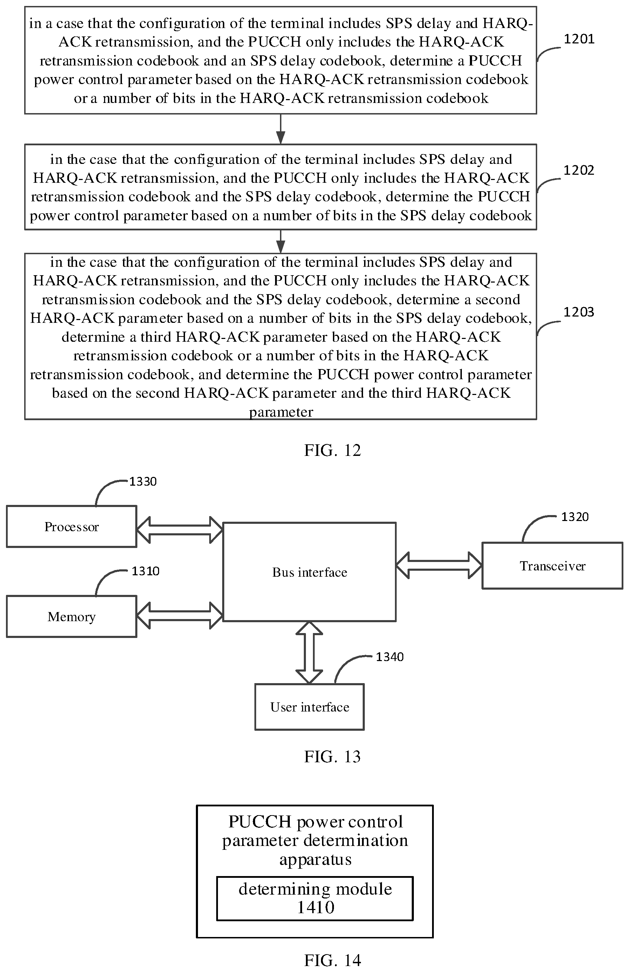

FIG. 12 illustrates a possible implementation for determining a PUCCH power control parameter when a configuration of a terminal includes SPS delay and HARQ-ACK retransmission, and a PUCCH only includes an HARQ-ACK retransmission codebook and an initial transmission codebook.

FIG. 12 is a flowchart of a PUCCH power control parameter determination method provided by a twelfth embodiment of the disclosure.

As illustrated in FIG. 12, the PUCCH power control parameter determination method includes the following steps.

At step 1201, in a case that the configuration of the terminal includes SPS delay and HARQ-ACK retransmission, and the PUCCH only includes the HARQ-ACK retransmission codebook and an SPS delay codebook, a PUCCH power control parameter is determined based on the HARQ-ACK retransmission codebook or a number of bits in the HARQ-ACK retransmission codebook.

In some embodiments, when the configuration of the terminal includes SPS delay and HARQ-ACK retransmission, and the PUCCH only includes the HARQ-ACK retransmission codebook and the SPS delay codebook, the PUCCH power control parameter is determined directly based on the HARQ-ACK retransmission codebook or the number of bits in the HARQ-ACK retransmission codebook, without considering the SPS delay codebook. That is, the PUCCH power control parameter is determined based on the HARQ-ACK retransmission codebook, or the number of bits in the HARQ-ACK retransmission codebook is determined as the PUCCH power control parameter, i.e., the PUCCH power control parameter=the number of bits in the HARQ-ACK retransmission codebook.

At step 1202, in the case that the configuration of the terminal includes SPS delay and HARQ-ACK retransmission, and the PUCCH only includes the HARQ-ACK retransmission codebook and the SPS delay codebook, the PUCCH power control parameter is determined based on a number of bits in the SPS delay codebook.

In some embodiments, when the configuration of the terminal includes SPS delay and HARQ-ACK retransmission, and the PUCCH only includes the HARQ-ACK retransmission codebook and the SPS delay codebook, the PUCCH power control parameter is directly determined based on the number of bits in the SPS delay codebook without considering the HARQ-ACK retransmission codebook, or the number of bits in the SPS delay codebook is determined as the PUCCH power control parameter, i.e., the PUCCH power control parameter=the number of bits in the SPS delay codebook.

At step 1203, in the case that the configuration of the terminal includes SPS delay and HARQ-ACK retransmission, and the PUCCH only includes the HARQ-ACK retransmission codebook and the SPS delay codebook, a second HARQ-ACK parameter is determined based on a number of bits in the SPS delay codebook, a third HARQ-ACK parameter is determined based on the HARQ-ACK retransmission codebook or a number of bits in the HARQ-ACK retransmission codebook, and the PUCCH power control parameter is determined based on the second HARQ-ACK parameter and the third HARQ-ACK parameter.

In some embodiments, in the case that the configuration of the terminal includes SPS delay and HARQ-ACK retransmission, and the PUCCH only includes the HARQ-ACK retransmission codebook and the SPS delay codebook, the number of bits in the SPS delay codebook is determined as the second HARQ-ACK parameter, the third HARQ-ACK parameter is determined based on the HARQ-ACK retransmission codebook, or the number of bits in the HARQ-ACK retransmission codebook is determined as the third HARQ-ACK parameter, then a sum of the second HARQ-ACK parameter and the third HARQ-ACK parameter is determined as the PUCCH power control parameter.

It should be noted that in the embodiment of FIG. 6, in the case that the configuration of the terminal includes SPS delay and HARQ-ACK retransmission, and the PUCCH only includes the HARQ-ACK retransmission codebook and the SPS delay codebook, the first HARQ-ACK parameter is set to the first fixed value, the second HARQ-ACK parameter is determined based on the number of bits in the SPS delay codebook, the third HARQ-ACK parameter is determined based on the HARQ-ACK retransmission codebook or the number of bits in the HARQ-ACK retransmission codebook, and the PUCCH power control parameter is the sum of the first fixed value, the second HARQ-ACK parameter and the third HARQ-ACK parameter. If the first fixed value is 0, the PUCCH power control parameter $=0+O_{SPS}+n_{HARQ-ACK,1}$, or $0+O_{SPS}+O_{retran}$, which is consistent with the solution provided in this step. If the first fixed value is not 0, the PUCCH power control parameter is a sum of the first fixed value (not 0), the second HARQ-ACK parameter and the third HARQ-ACK parameter, which differs from the solution provided in this step.

The PUCCH power control parameter determination method provided by the disclosure addresses the technical problem of determining a power of a PUCCH in the case of codebook cascading in the related arts. It determines the PUCCH power control parameter based on the HARQ-ACK retransmission codebook or the number of bits in the HARQ-ACK retransmission codebook in the case that the configuration of the terminal includes SPS delay and HARQ-ACK retransmission and the PUCCH only includes the HARQ-ACK retransmission codebook and the SPS delay codebook. Or, in the case that the configuration of the terminal includes SPS delay and HARQ-ACK retransmission and the PUCCH only includes the HARQ-ACK retransmission codebook and the SPS delay codebook, it determines the PUCCH power control parameter based on the number of bits in the SPS delay codebook. Or, in the case that the configuration of the terminal includes SPS delay and HARQ-ACK retransmission and the PUCCH only includes the HARQ-ACK retransmission codebook and the SPS delay codebook, it determines the second HARQ-ACK parameter based on the number of bits in the SPS delay codebook, determines the third HARQ-ACK parameter based on the HARQ-ACK retransmission codebook

or the number of bits in the HARQ-ACK retransmission codebook, and determines the PUCCH power control parameter based on the second HARQ-ACK parameter and the third HARQ-ACK parameter.

To clearly illustrate how to determine a PUCCH power control parameter when a configuration of a terminal includes SPS delay and HARQ-ACK retransmission, an example is provided below.

As an example, if it is configured with SPS HARQ-ACK delay and HARQ-ACK codebook retransmission, when an HARQ-ACK is carried over a PUCCH format 2/3/4 and a number of bits of UCI feedback is greater than 2 and less than or equal to 11, the PUCCH power control parameter $n_{\text{HARQ-ACK}}$ is determined based on the HARQ-ACK codebook transmission condition on the PUCCH, and then the power of the PUCCH is determined based on $n_{\text{HARQ-ACK}}$. The specific modes of determining $n_{\text{HARQ-ACK}}$ are provided below.

Solution 1: determining the PUCCH power control parameter $n_{\text{HARQ-ACK}}$ based on the following equation:

$$n_{\text{HARQ-ACK}} = n_{\text{HARQ-ACK,0}} + O_{\text{SPS}} + n_{\text{HARQ-ACK,1}}, \text{ or } n_{\text{HARQ-ACK}} = n_{\text{HARQ-ACK,0}} + O_{\text{SPS}} + O_{\text{retran}}$$

If the PUCCH includes an initial transmission codebook, $n_{\text{HARQ-ACK,0}}$ is determined based on the initial transmission codebook; otherwise, $n_{\text{HARQ-ACK,0}} = 0$.

If the PUCCH includes an HARQ-ACK retransmission codebook, $n_{\text{HARQ-ACK,1}}$ is determined based on the HARQ-ACK retransmission codebook or $O_{\text{retran}} =$ a number of bits in the HARQ-ACK retransmission codebook; otherwise, $n_{\text{HARQ-ACK,1}}$ or $O_{\text{retran}} = 0$;

If the PUCCH includes an SPS delay codebook, $O_{\text{SPS}} =$ a number of bits in the SPS delay codebook; otherwise, $O_{\text{SPS}} = 0$.

Solution 2: determining the PUCCH power control parameter $n_{\text{HARQ-ACK}}$ based on the following equation:

$$n_{\text{HARQ-ACK}} = n_{\text{HARQ-ACK,0}} + \alpha^* O_{\text{retran}} + \beta^* O_{\text{SPS}}.$$

In a case that the PUCCH includes an initial transmission codebook, $n_{\text{HARQ-ACK,0}}$ is determined based on the initial transmission codebook included in the PUCCH.

Moreover, $O_{\text{retran}}$ represents a number of bits in an HARQ-ACK retransmission codebook;

$O_{\text{SPS}}$ represents a number of bits in an SPS delay codebook;
$\alpha$ and $\beta$ are parameters greater than or equal to 0 and less than or equal to 1, which are predefined or configured by a high-layer parameter.

Solution 3: determining $n_{\text{HARQ-ACK}}$ based on the codebook included in the PUCCH, and determining a power of the PUCCH based on $n_{\text{HARQ-ACK}}$.

1. If the PUCCH only includes an SPS delay codebook, $n_{\text{HARQ-ACK}} =$ a number of bits in the SPS delay codebook;
2. If the PUCCH only includes an HARQ-ACK retransmission codebook, $n_{\text{HARQ-ACK}}$ is determined based on the HARQ-ACK retransmission codebook, or $n_{\text{HARQ-ACK}} =$ a number of bits in the HARQ-ACK retransmission codebook;
3. If the PUCCH includes an HARQ-ACK retransmission codebook, an SPS delay codebook, and an initial transmission codebook, the ways of determining a power of the PUCCH include:

3-1: determining $n_{\text{HARQ-ACK,0}}$ based on the initial transmission codebook; determining $n_{\text{HARQ-ACK,1}}$ based on the HARQ-ACK retransmission codebook or determining that $O_{\text{retran}} =$ a number of bits in the HARQ-ACK retransmission codebook; determining that $O_{\text{SPS}} =$ a number of bits in the SPS delay codebook; determining that $n_{\text{HARQ-ACK}} = n_{\text{HARQ-ACK,0}} + n_{\text{HARQ-ACK,1}} + O_{\text{SPS}}$, or $n_{\text{HARQ-ACK}} = n_{\text{HARQ-ACK,0}} + O_{\text{SPS}} + O_{\text{retran}}$; and determining the power of the PUCCH based on $n_{\text{HARQ-ACK}}$;
3-2: determining $n_{\text{HARQ-ACK}}$ based on the initial transmission codebook without considering the HARQ-ACK retransmission codebook and the SPS delay codebook;
3-3: determining $n_{\text{HARQ-ACK,0}}$ based on the initial transmission codebook; determining $n_{\text{HARQ-ACK,1}}$ based on the HARQ-ACK retransmission codebook or $O_{\text{retran}} =$ a number of bits in the HARQ-ACK retransmission codebook; determining that $n_{\text{HARQ-ACK}} = n_{\text{HARQ-ACK,0}} + n_{\text{HARQ-ACK,1}}$, or $n_{\text{HARQ-ACK}} = n_{\text{HARQ-ACK,0}} + O_{\text{retran}}$; and determining the power of the PUCCH based on $n_{\text{HARQ-ACK}}$; or
3-4: determining $n_{\text{HARQ-ACK,0}}$ based on the initial transmission codebook; determining that $O_{\text{SPS}} =$ a number of bits in the SPS delay codebook; determining that $n_{\text{HARQ-ACK}} = n_{\text{HARQ-ACK,0}} + O_{\text{SPS}}$; and determining the power of the PUCCH based on $n_{\text{HARQ-ACK}}$.

4. If the PUCCH includes an SPS delay codebook and an initial transmission codebook, the ways of determining a power of the PUCCH include:

4-1: determining $n_{\text{HARQ-ACK}}$ based on the initial transmission codebook without considering the SPS delay codebook; and

4-2: determining $n_{\text{HARQ-ACK,0}}$ based on the initial transmission codebook; determining that $O_{\text{SPS}}$=a number of bits in the SPS delay codebook; determining that $n_{\text{HARQ-ACK}=}$ $n_{\text{HARQ-ACK,0}}$+ $O_{\text{SPS}}$; and determining the power of the PUCCH based on $n_{\text{HARQ-ACK}}$.

5. If the PUCCH includes an HARQ-ACK retransmission codebook and an initial transmission codebook, the ways of determining a power of the PUCCH include:

5-1: determining $n_{\text{HARQ-ACK}}$ based on the initial transmission codebook without considering the HARQ-ACK retransmission codebook; and

5-2: determining $n_{\text{HARQ-ACK,0}}$ based on the initial transmission codebook; determining $n_{\text{HARQ-ACK,1}}$ based on the HARQ-ACK retransmission codebook or $O_{\text{retran}}$ =a number of bits in the HARQ-ACK retransmission codebook; determining that $n_{\text{HARQ-ACK}}= n_{\text{HARQ-ACK,0}}+n_{\text{HARQ-ACK,1}}$, or $n_{\text{HARQ-ACK}}= n_{\text{HARQ-ACK,0}+}O_{\text{retran}}$; and determining the power of the PUCCH based on $n_{\text{HARQ-ACK}}$.

6. If the PUCCH includes an HARQ-ACK retransmission codebook and an SPS delay codebook, the ways of determining a power of the PUCCH include:

6-1: determining $n_{\text{HARQ-ACK}}$ based on the HARQ-ACK retransmission codebook, or setting $n_{\text{HARQ-ACK}}$=a number of bits in the HARQ-ACK retransmission codebook without considering the SPS delay codebook;

6-2: setting $n_{\text{HARQ-ACK}}$=a number of bits in the SPS delay codebook without considering the HARQ-ACK retransmission codebook; and

6-3: determining $n_{\text{HARQ-ACK,1}}$ based on the HARQ-ACK retransmission codebook or setting $O_{\text{retran}}$=a number of bits in the HARQ-ACK retransmission codebook; determining that $O_{\text{SPS}}$=a number of bits in the SPS delay codebook; determining that $n_{\text{HARQ-ACK}}= n_{\text{HARQ-ACK,1}}+O_{\text{SPS}}$, or $n_{\text{HARQ-ACK}=}O_{\text{retran}}+O_{\text{SPS}}$; and determining the power of the PUCCH based on $n_{\text{HARQ-ACK}}$.

Assuming the UE is configured with HARQ-ACK codebook retransmission and it uses a PUCCH format 2/3/4 for HARQ-ACK transmission, when $O_{\text{ACK}}+O_{\text{SR}}+O_{\text{CSI}}\leq 11$, the UE determines a number of HARQ-ACK information bits used for determining a transmission power of the PUCCH, i.e., the PUCCH power control parameter $n_{\text{HARQ-ACK}}$, based on the above three solutions. When $O_{\text{ACK}}+O_{\text{SR}}+O_{\text{CS}}>11$, the UE determines $O_{\text{ACK}}$, which represents a number of bits in the HARQ-ACK carried on the PUCCH, for determining the transmission power of the PUCCH based on a total number of bits in the cascaded HARQ-ACK codebooks.

It should be noted that in the above solutions, $n_{\text{HARQ-ACK,0}}$ or $n_{\text{HARQ-ACK}}$ is determined based on the initial transmission codebook, and $n_{\text{HARQ-ACK,1}}$ or $n_{\text{HARQ-ACK}}$ is determined based on the retransmission codebook. If the initial transmission codebook is a Type-1 HARQ-ACK codebook, $n_{\text{HARQ-ACK,0}}$, $n_{\text{HARQ-ACK,1}}$ or $n_{\text{HARQ-ACK}}$ described here can refer to $n_{\text{HARQ-ACK}}$ defined in Sections 9.1.2.1 or 16.5.1.1 of 3GPP TS 38.213. If the initial transmission codebook is a Type-2 HARQ-ACK codebook, $n_{\text{HARQ-ACK,0}}$, $n_{\text{HARQ-ACK,1}}$ or $n_{\text{HARQ-ACK}}$ described here can refer to $n_{\text{HARQ-ACK}}$ defined in Sections 9.1.3.1, 9.1.3.3, or 16.5.2.1 of 3GPP TS 38.213.

In conclusion, if it is configured with SPS HARQ-ACK delay and HARQ-ACK codebook retransmission, when an HARQ-ACK is carried in a PUCCH format 2/3/4 and a number of bits of UCI feedback is greater than 2 and less than or equal to 11, the PUCCH power control parameter $n_{\text{HARQ-ACK}}$ is determined based on the HARQ-ACK codebook transmission condition on the PUCCH, ensuring PUCCH transmission performance in such case.

To implement the above embodiments, the disclosure provides a PUCCH power control parameter determination device.

FIG. 13 is a schematic structural diagram of a PUCCH power control parameter determination device provided by a thirteenth embodiment of the disclosure.

As illustrated in FIG. 13, the PUCCH power control parameter determination device includes: a memory 1310, a transceiver 1320 and a processor 1330.

The memory 1310 is configured to store a computer program. The transceiver 1320 is configured to transmit and receive data under the control of the processor. The processor 1330 is configured to read the computer program from the memory and perform the following operation:

determining a PUCCH power control parameter based on a configuration of a terminal and a codebook included in a PUCCH, in which the PUCCH power control parameter is used to determine a power of the PUCCH.

On the terminal side, the transceiver 1320 is configured to transmit and receive data under the control of the processor 1330.

In FIG. 13, the bus architecture includes any number of interconnected buses and bridges. In detail, one or more processors represented by the processor 1330 are connected with various circuits of a memory represented by the memory 1310. The bus architecture may also connect peripheral devices, voltage regulators, and various other circuits such as power management circuits together, which is well known in the field and will not be further described herein. The bus interface provides an interface. The transceiver 1320 contains a plurality of elements, such as a transmitter and a receiver, to provide units for communicating with various other devices over transmission mediums, such as wireless channels, wired channels, and fiber optic cables. For different UEs, a user interface 1340 may also be an interface capable of externally and internally connecting to a device required for connectivity. The device includes, but is not limited to, a keypad, a display, a speaker, a microphone, a joystick, and the like.

The processor 1330 is responsible for managing bus architecture and general processing, and the memory 1310 is able to store data used by the processor 1330 during operations.

In some embodiments, the processor 1330 may be a central processing unit (CPU), an application specific integrated circuit (ASIC), a field-programmable gate array (FPGA), or a complex programmable logic device (CPLD). The processor 1330 may adopt a multi-core architecture.

The processor 1330 is configured to implement any of the methods provided by the embodiments of the disclosure by calling computer programs stored in the memory 1310 and executing obtained executable instructions. The processor 1330 and the memory 1310 may also be physically separated.

In some embodiments, the processor 1330 is configured to:

in a case that the configuration of the terminal includes SPS delay, determine the PUCCH power control parameter based on a first HARQ-ACK parameter and a second HARQ-ACK parameter;

in which if the PUCCH includes an initial transmission codebook, the first HARQ-ACK parameter is determined based on the initial transmission codebook; and if the PUCCH does not include the initial transmission codebook, the first HARQ-ACK parameter is a first fixed value; and

if the PUCCH includes an SPS delay codebook, the second HARQ-ACK parameter is determined based on a number of bits in the SPS delay codebook; and if the PUCCH does not include the SPS delay codebook, the second HARQ-ACK parameter is a second fixed value.

In some embodiments, the processor 1330 is configured to:

in a case that the configuration of the terminal includes HARQ-ACK retransmission, determine the PUCCH power control parameter based on a first HARQ-ACK parameter and a third HARQ-ACK parameter;

in which if the PUCCH includes an initial transmission codebook, the first HARQ-ACK parameter is determined based on the initial transmission codebook; and if the PUCCH does not include the initial transmission codebook, the first HARQ-ACK parameter is a first fixed value; and

if the PUCCH includes an HARQ-ACK retransmission codebook, the third HARQ-ACK parameter is determined based on the HARQ-ACK retransmission codebook or a number of bits in the HARQ-ACK retransmission codebook; and if the PUCCH does not include the HARQ-ACK retransmission codebook, the third HARQ-ACK parameter is a third fixed value.

In some embodiments, the processor 1330 is configured to:

in a case that the configuration of the terminal includes SPS delay and HARQ-ACK retransmission, determine the PUCCH power control parameter based on a first HARQ-ACK parameter, a second HARQ-ACK parameter and a third HARQ-ACK parameter;

in which if the PUCCH includes an initial transmission codebook, the first HARQ-ACK parameter is determined based on the initial transmission codebook; and if the PUCCH does not include the initial transmission codebook, the first HARQ-ACK parameter is a first fixed value;

if the PUCCH includes an SPS delay codebook, the second HARQ-ACK parameter is determined based on a number of bits in the SPS delay codebook; and if the PUCCH does not include the SPS delay codebook, the second HARQ-ACK parameter is a second fixed value; and

if the PUCCH includes an HARQ-ACK retransmission codebook, the third HARQ-ACK parameter is determined based on the HARQ-ACK retransmission codebook or a number of bits in the HARQ-ACK retransmission codebook; and if the PUCCH does not include the HARQ-ACK retransmission codebook, the third HARQ-ACK parameter is a third fixed value.

In some embodiments, the processor 1330 is configured to:

in a case that the configuration of the terminal includes SPS delay and HARQ-ACK retransmission, determine the PUCCH power control parameter based on a first HARQ-ACK parameter, a number of bits in an HARQ-ACK retransmission codebook, a number of bits in an SPS delay codebook, a first parameter and a second parameter; in which in a case that the PUCCH includes an initial transmission codebook, the first HARQ-ACK parameter is determined based on the initial transmission codebook; and
the first parameter and the second parameter are either predefined or configured by a high-layer parameter.

In some embodiments, the processor 1330 is configured to:

in a case that the configuration of the terminal includes SPS delay, and the PUCCH only includes an SPS delay codebook, determine the PUCCH power control parameter based on a number of bits in the SPS delay codebook; or in a case that the configuration of the terminal includes SPS delay, and the PUCCH includes both an SPS delay codebook and an initial transmission codebook, determine the PUCCH power control parameter based on the initial transmission codebook.

In some embodiments, the processor 1330 is configured to:

in a case that the configuration of the terminal includes HARQ-ACK retransmission, and the PUCCH only includes an HARQ-ACK retransmission codebook, determine the PUCCH power control parameter based on the HARQ-ACK retransmission codebook or a number of bits in the HARQ-ACK retransmission codebook; or in a case that the configuration of the terminal includes HARQ-ACK retransmission, and the PUCCH includes both an HARQ-ACK retransmission codebook and an initial transmission codebook, determine the PUCCH power control parameter based on the initial transmission codebook.

In some embodiments, the processor 1330 is configured to:

in a case that the configuration of the terminal includes SPS delay and HARQ-ACK retransmission, and the PUCCH only includes an SPS delay codebook, determine the PUCCH power control parameter based on a number of bits in the SPS delay codebook; or in a case that the configuration of the terminal includes SPS delay and HARQ-ACK retransmission, and the PUCCH only includes an HARQ-ACK retransmission codebook, determine the PUCCH power control parameter based on the HARQ-ACK retransmission codebook or a number of bits in the HARQ-ACK retransmission codebook.

In some embodiments, the processor 1330 is configured to:

in a case that the configuration of the terminal includes SPS delay and HARQ-ACK retransmission, and the PUCCH includes an HARQ-ACK retransmission codebook, an SPS delay codebook and an initial transmission codebook, determine the PUCCH power control parameter based on the initial transmission codebook; or, in a case that the configuration of the terminal includes SPS delay and HARQ-ACK retransmission, and the PUCCH includes an HARQ-ACK retransmission codebook, an SPS delay codebook and an initial transmission codebook, determine a first HARQ-ACK parameter based on the initial transmission codebook, determine a second HARQ-ACK parameter based on a number of bits in the SPS delay codebook, determine a third HARQ-ACK parameter based on the HARQ-ACK retransmission codebook or a number of bits in the HARQ-ACK retransmission codebook, and determine the PUCCH power control parameter based on the first HARQ-ACK parameter and at least one of the second HARQ-ACK parameter or the third HARQ-ACK parameter.

In some embodiments, the processor 1330 is configured to:

in a case that the configuration of the terminal includes SPS delay and HARQ-ACK retransmission, and the PUCCH only includes an SPS delay codebook and an initial transmission codebook, determine the PUCCH power control parameter based on the initial transmission codebook; or, in a case that the configuration of the terminal includes SPS delay and HARQ-ACK retransmission, and the PUCCH only includes an SPS delay codebook and an initial transmission codebook, determine a first HARQ-ACK parameter based on the initial transmission codebook, determine a second HARQ-ACK parameter based on a number of bits in the SPS delay codebook, and determine the PUCCH power control parameter based on the first HARQ-ACK parameter and the second HARQ-ACK parameter.

In some embodiments, the processor 1330 is configured to:

in a case that the configuration of the terminal includes SPS delay and HARQ-ACK retransmission, and the PUCCH only includes an HARQ-ACK retransmission codebook and an initial transmission codebook, determine the PUCCH power control parameter based on the initial transmission codebook; or,

in a case that the configuration of the terminal includes SPS delay and HARQ-ACK retransmission, and the PUCCH only includes an HARQ-ACK retransmission codebook and an initial transmission codebook, determine a first HARQ-ACK parameter based on the initial transmission codebook, determine a third HARQ-ACK parameter based on the HARQ-ACK retransmission codebook or a number of bits in the HARQ-ACK retransmission codebook, and determine the PUCCH power control parameter based on the first HARQ-ACK parameter and the third HARQ-ACK parameter.

In some embodiments, the processor 1330 is configured to:

in a case that the configuration of the terminal includes SPS delay and HARQ-ACK retransmission, and the PUCCH only includes an HARQ-ACK retransmission codebook and an SPS delay codebook, determine the PUCCH power control parameter based on the HARQ-ACK retransmission codebook or a number of bits in the HARQ-ACK retransmission codebook; or,

in a case that the configuration of the terminal includes SPS delay and HARQ-ACK retransmission, and the PUCCH only includes an HARQ-ACK retransmission codebook and an SPS delay codebook, determine the PUCCH power control parameter based on a number of bits in the SPS delay codebook; or,

in a case that the configuration of the terminal includes SPS delay and HARQ-ACK retransmission, and the PUCCH only includes an HARQ-ACK retransmission codebook and an SPS delay codebook, determine a second HARQ-ACK parameter based on a number of bits in the SPS delay codebook, determine a third HARQ-ACK parameter based on the HARQ-ACK retransmission codebook or a number of bits in the HARQ-ACK retransmission codebook, and determine the PUCCH power control parameter based on the second HARQ-ACK parameter and the third HARQ-ACK parameter.

It should be noted that the device provided in the embodiments of the disclosure is capable of performing the steps of each of the methods provided by the above method embodiments and achieving the same technical effects. Therefore, the same contents and beneficial effects in the method embodiments will not be repeated in the embodiments of the disclosure.

To implement the above embodiments, the disclosure also provides a PUCCH power control parameter determination apparatus.

FIG. 14 is a schematic structural diagram of a PUCCH power control parameter determination apparatus provided by a fourteenth embodiment of the disclosure.

As illustrated in FIG. 14, the PUCCH power control parameter determination apparatus includes a determining module 1410.

The determining module 1410 is configured to determine a PUCCH power control parameter based on a configuration of a terminal and a codebook included in a PUCCH, in which the PUCCH power control parameter is used to determine a power of the PUCCH.

In some embodiments, the determining module 1410 is configured to:

in a case that the configuration of the terminal includes SPS delay, determine the PUCCH power control parameter based on a first HARQ-ACK parameter and a second HARQ-ACK parameter;

in which if the PUCCH includes an initial transmission codebook, the first HARQ-ACK parameter is determined based on the initial transmission codebook; and if the PUCCH does not include the initial transmission codebook, the first HARQ-ACK parameter is a first fixed value; and

if the PUCCH includes an SPS delay codebook, the second HARQ-ACK parameter is determined based on a number of bits in the SPS delay codebook; and if the PUCCH does not include the SPS delay codebook, the second HARQ-ACK parameter is a second fixed value.

In some embodiments, the determining module 1410 is configured to:

in a case that the configuration of the terminal includes HARQ-ACK retransmission, determine the PUCCH power control parameter based on a first HARQ-ACK parameter and a third HARQ-ACK parameter;

in which if the PUCCH includes an initial transmission codebook, the first HARQ-ACK parameter is determined based on the initial transmission codebook; and if the PUCCH does not include the initial transmission codebook, the first HARQ-ACK parameter is a first fixed value; and

if the PUCCH includes an HARQ-ACK retransmission codebook, the third HARQ-ACK parameter is determined based on the HARQ-ACK retransmission codebook or a number of bits in the HARQ-ACK retransmission codebook;

and if the PUCCH does not include the HARQ-ACK retransmission codebook, the third HARQ-ACK parameter is a third fixed value.

In some embodiments, the determining module 1410 is configured to:

in a case that the configuration of the terminal includes SPS delay and HARQ-ACK retransmission, determine the PUCCH power control parameter based on a first HARQ-ACK parameter, a second HARQ-ACK parameter and a third HARQ-ACK parameter;
in which if the PUCCH includes an initial transmission codebook, the first HARQ-ACK parameter is determined based on the initial transmission codebook; and if the PUCCH does not include the initial transmission codebook, the first HARQ-ACK parameter is a first fixed value;
if the PUCCH includes an SPS delay codebook, the second HARQ-ACK parameter is determined based on a number of bits in the SPS delay codebook; and if the PUCCH does not include the SPS delay codebook, the second HARQ-ACK parameter is a second fixed value; and
if the PUCCH includes an HARQ-ACK retransmission codebook, the third HARQ-ACK parameter is determined based on the HARQ-ACK retransmission codebook or a number of bits in the HARQ-ACK retransmission codebook; and if the PUCCH does not include the HARQ-ACK retransmission codebook, the third HARQ-ACK parameter is a third fixed value.

In some embodiments, the determining module 1410 is configured to:

in a case that the configuration of the terminal includes SPS delay and HARQ-ACK retransmission, determine the PUCCH power control parameter based on a first HARQ-ACK parameter, a number of bits in an HARQ-ACK retransmission codebook, a number of bits in an SPS delay codebook, a first parameter and a second parameter;
in which in a case that the PUCCH includes an initial transmission codebook, the first HARQ-ACK parameter is determined based on the initial transmission codebook; and
the first parameter and the second parameter are either predefined or configured by a high-layer parameter.

In some embodiments, the determining module 1410 is configured to:

in a case that the configuration of the terminal includes SPS delay, and the PUCCH only includes an SPS delay codebook, determine the PUCCH power control parameter based on a number of bits in the SPS delay codebook; or
in a case that the configuration of the terminal includes SPS delay, and the PUCCH includes both an SPS delay codebook and an initial transmission codebook, determine the PUCCH power control parameter based on the initial transmission codebook.

In some embodiments, the determining module 1410 is configured to:

in a case that the configuration of the terminal includes HARQ-ACK retransmission, and the PUCCH only includes an HARQ-ACK retransmission codebook, determine the PUCCH power control parameter based on the HARQ-ACK retransmission codebook or a number of bits in the HARQ-ACK retransmission codebook; or
in a case that the configuration of the terminal includes HARQ-ACK retransmission, and the PUCCH includes both an HARQ-ACK retransmission codebook and an initial transmission codebook, determine the PUCCH power control parameter based on the initial transmission codebook.

In some embodiments, the determining module 1410 is configured to:

in a case that the configuration of the terminal includes SPS delay and HARQ-ACK retransmission, and the PUCCH only includes an SPS delay codebook, determine the PUCCH power control parameter based on a number of bits in the SPS delay codebook; or
in a case that the configuration of the terminal includes SPS delay and HARQ-ACK retransmission, and the PUCCH only includes an HARQ-ACK retransmission codebook, determine the PUCCH power control parameter based on the HARQ-ACK retransmission codebook or a number of bits in the HARQ-ACK retransmission codebook.

In some embodiments, the determining module 1410 is configured to:

in a case that the configuration of the terminal includes SPS delay and HARQ-ACK retransmission, and the PUCCH includes an HARQ-ACK retransmission codebook, an SPS delay codebook and an initial transmission codebook, determine the PUCCH power control parameter based on the initial transmission codebook; or,

in a case that the configuration of the terminal includes SPS delay and HARQ-ACK retransmission, and the PUCCH includes an HARQ-ACK retransmission codebook, an SPS delay codebook and an initial transmission codebook, determine a first HARQ-ACK parameter based on the initial transmission codebook, determine a second HARQ-ACK parameter based on a number of bits in the SPS delay codebook, determine a third HARQ-ACK parameter based on the HARQ-ACK retransmission codebook or a number of bits in the HARQ-ACK retransmission codebook, and determine the PUCCH power control parameter based on the first HARQ-ACK parameter and at least one of the second HARQ-ACK parameter or the third HARQ-ACK parameter.

In some embodiments, the determining module 1410 is configured to:
in a case that the configuration of the terminal includes SPS delay and HARQ-ACK retransmission, and the PUCCH only includes an SPS delay codebook and an initial transmission codebook, determine the PUCCH power control parameter based on the initial transmission codebook; or,
in a case that the configuration of the terminal includes SPS delay and HARQ-ACK retransmission, and the PUCCH only includes an SPS delay codebook and an initial transmission codebook, determine a first HARQ-ACK parameter based on the initial transmission codebook, determine a second HARQ-ACK parameter based on a number of bits in the SPS delay codebook, and determine the PUCCH power control parameter based on the first HARQ-ACK parameter and the second HARQ-ACK parameter.

In some embodiments, the determining module 1410 is configured to:

in a case that the configuration of the terminal includes SPS delay and HARQ-ACK retransmission, and the PUCCH only includes an HARQ-ACK retransmission codebook and an initial transmission codebook, determine the PUCCH power control parameter based on the initial transmission codebook; or,
in a case that the configuration of the terminal includes SPS delay and HARQ-ACK retransmission, and the PUCCH only includes an HARQ-ACK retransmission codebook and an initial transmission codebook, determine a first HARQ-ACK parameter based on the initial transmission codebook, determine a third HARQ-ACK parameter based on the HARQ-ACK retransmission codebook or a number of bits in the HARQ-ACK retransmission codebook, and determine the PUCCH power control parameter based on the first HARQ-ACK parameter and the third HARQ-ACK parameter.

In some embodiments, the determining module 1410 is configured to:

in a case that the configuration of the terminal includes SPS delay and HARQ-ACK retransmission, and the PUCCH only includes an HARQ-ACK retransmission codebook and an SPS delay codebook, determine the PUCCH power control parameter based on the HARQ-ACK retransmission codebook or a number of bits in the HARQ-ACK retransmission codebook; or,
in a case that the configuration of the terminal includes SPS delay and HARQ-ACK retransmission, and the PUCCH only includes an HARQ-ACK retransmission codebook and an SPS delay codebook, determine the PUCCH power control parameter based on a number of bits in the SPS delay codebook; or,
in a case that the configuration of the terminal includes SPS delay and HARQ-ACK retransmission, and the PUCCH only includes an HARQ-ACK retransmission codebook and an SPS delay codebook, determine a second HARQ-ACK parameter based on a number of bits in the SPS delay codebook, determine a third HARQ-ACK parameter based on the HARQ-ACK retransmission codebook or a number of bits in the HARQ-ACK retransmission codebook, and determine the PUCCH power control parameter based on the second HARQ-ACK parameter and the third HARQ-ACK parameter.

It should be noted that the division of units in the embodiments of the disclosure is illustrative. The division is only a logical division, and there are other types of divisions in practical applications. The units in each embodiment of the disclosure may be integrated into a single processing unit or physically separated, or two or more units may be integrated into a single unit. The integrated units described above may be implemented either in hardware or as software units.

The integrated units can be stored in a processor-readable storage medium if they are implemented in the form of software units and sold or used as independent products. Based on this understanding, the essence of the technical solution of the disclosure, a portion of the technical solution of the disclosure that contributes to the related arts, or all or part of the technical solution of the disclosure may be embodied in the form of software product. The computer software product is stored in a storage medium and includes several instructions to cause a computer device (e.g., a personal computer, a server, and a network device) or a processor to implement all or part of the steps of the method in the embodiments of the disclosure. The storage medium includes: an USB flash drive, a mobile hard drive, a read-only memory (ROM), a random access memory (RAM), a disk or a CD-ROM, and other mediums that can be used to store program codes.

It should be noted that the apparatus provided in the embodiments of the disclosure is capable of performing the steps of each of the methods provided by the above method embodiments and achieving the same technical effects. Therefore, the same contents and beneficial effects in the method embodiments will not be repeated in the embodiments of the disclosure.

To implement the above embodiments, the disclosure further provides a processor-readable storage medium. The processor-readable storage medium stores a computer program, which is used to cause a processor to implement the PUCCH power control parameter determination method in the embodiments of FIGS. 1-12 of the disclosure.

The processor-readable storage medium may be any available medium or data storage device accessible by the processor, which includes, but is not limited to, a magnetic storage medium (e.g., a floppy disk, a hard disk, a magnetic tape, and a magneto-optical (MO) disk), an optical storage medium (e.g., a compact disc (CD), a digital versatile disc (DVD), a Blu-ray disc (BD) and a high-definition versatile disc (HVD)), and a semiconductor storage medium (e.g., a ROM, an erasable programmable read only memory (EPROM), an electrically-erasable programmable read only memory (EEPROM), a NAND FLASH, and a solid-state drive (SSD)).

Those skilled in the art understand that the embodiments of the disclosure may be provided as a method, a system or a computer program product. Therefore, the disclosure may be implemented in the form of all hardware embodiments, all software embodiments, or a combination of hardware embodiments and software embodiments. Moreover, the disclosure may be implemented in the form of a computer program product embodied on one or more computer-usable storage mediums (including but not limited to a magnetic disk memory and an optical memory) containing computer usable program codes.

The disclosure is described with reference to flowcharts and/or block diagrams of methods, apparatus (systems) and computer program products according to the embodiments of the disclosure. It should be understood that each process and/or block in the flowcharts and/or block diagrams, or combinations of processes and/or boxes in the flowcharts and/or block diagrams, can be implemented by computer-executable instructions. These computer-executable instructions are provided to a processor of a general-purpose computer, a dedicated computer, an embedded processor or a programmable data processing device to produce a machine, so that the instructions executed by the processor of the computer or the programmable data processing device can produce an apparatus for implementing functions specified in one or more processes in each flowchart and/or one or more blocks in each block diagram.

These processor-executable instructions may also be stored in a processor-readable memory that can direct a computer or other programmable data processing devices to operate in a specific way, so that the instructions stored in the processor-readable memory can produce an article containing an instructing unit used for implementing the functions specified in one or more processes in each flowchart and/or one or more blocks in each block diagram.

These processor-executable instructions may also be loaded onto a computer or other programmable data processing devices, so that a series of operational steps can be executed on the computer or other programmable devices to produce processes implementable by the computer. The instructions executed on the computer or the programmable devices provide steps for implementing the functions specified in one or more processes in each flowchart and/or one or more blocks in each block diagram.

Obviously, various changes and modifications made by those skilled in the art to the disclosure are within the spirit and scope of the disclosure. Since these changes and modifications to the disclosure fall within the scope of the claims of the disclosure and their equivalents, the disclosure is intended to include these changes and modifications.

**Claims**

1. A physical uplink control channel (PUCCH) power control parameter determination method, applied to a terminal, comprising:
   determining a PUCCH power control parameter based on a configuration of the terminal and a codebook included in a PUCCH, wherein the PUCCH power control parameter is used to determine a power of the PUCCH.

2. The method of claim 1, wherein determining the PUCCH power control parameter based on the configuration of the terminal and the codebook included in the PUCCH, comprises:

   in a case that the configuration of the terminal comprises semi-persistent scheduling (SPS) delay, determining the PUCCH power control parameter based on a first hybrid automatic repeat request-acknowledgement (HARQ-ACK) parameter and a second HARQ-ACK parameter;
   wherein in a case that the PUCCH comprises an initial transmission codebook, the first HARQ-ACK parameter is determined based on the initial transmission codebook; and in a case that the PUCCH does not comprise the initial transmission codebook, the first HARQ-ACK parameter is a first fixed value; and
   in a case that the PUCCH comprises an SPS delay codebook, the second HARQ-ACK parameter is determined based on a number of bits in the SPS delay codebook; and in a case that the PUCCH does not comprise the SPS delay codebook, the second HARQ-ACK parameter is a second fixed value.

3. The method of claim 1, wherein determining the PUCCH power control parameter based on the configuration of the terminal and the codebook included in the PUCCH, comprises:

in a case that the configuration of the terminal comprises HARQ-ACK retransmission, determining the PUCCH power control parameter based on a first HARQ-ACK parameter and a third HARQ-ACK parameter; wherein in a case that the PUCCH comprises an initial transmission codebook, the first HARQ-ACK parameter is determined based on the initial transmission codebook; and in a case that the PUCCH does not comprise the initial transmission codebook, the first HARQ-ACK parameter is a first fixed value; and in a case that the PUCCH comprises an HARQ-ACK retransmission codebook, the third HARQ-ACK parameter is determined based on the HARQ-ACK retransmission codebook or a number of bits in the HARQ-ACK retransmission codebook; and in a case that the PUCCH does not comprise the HARQ-ACK retransmission codebook, the third HARQ-ACK parameter is a third fixed value.

4. The method of claim 1, wherein determining the PUCCH power control parameter based on the configuration of the terminal and the codebook included in the PUCCH, comprises:

in a case that the configuration of the terminal comprises SPS delay and HARQ-ACK retransmission, determining the PUCCH power control parameter based on a first HARQ-ACK parameter, a second HARQ-ACK parameter and a third HARQ-ACK parameter; wherein in a case that the PUCCH comprises an initial transmission codebook, the first HARQ-ACK parameter is determined based on the initial transmission codebook; and in a case that the PUCCH does not comprise the initial transmission codebook, the first HARQ-ACK parameter is a first fixed value; in a case that the PUCCH comprises an SPS delay codebook, the second HARQ-ACK parameter is determined based on a number of bits in the SPS delay codebook; and in a case that the PUCCH does not comprise the SPS delay codebook, the second HARQ-ACK parameter is a second fixed value; and in a case that the PUCCH comprises an HARQ-ACK retransmission codebook, the third HARQ-ACK parameter is determined based on the HARQ-ACK retransmission codebook or a number of bits in the HARQ-ACK retransmission codebook; and in a case that the PUCCH does not comprise the HARQ-ACK retransmission codebook, the third HARQ-ACK parameter is a third fixed value.

5. The method of claim 1, wherein determining the PUCCH power control parameter based on the configuration of the terminal and the codebook included in the PUCCH, comprises:

in a case that the configuration of the terminal comprises SPS delay and HARQ-ACK retransmission, determining the PUCCH power control parameter based on a first HARQ-ACK parameter, a number of bits in an HARQ-ACK retransmission codebook, a number of bits in an SPS delay codebook, a first parameter and a second parameter; wherein in a case that the PUCCH comprises an initial transmission codebook, the first HARQ-ACK parameter is determined based on the initial transmission codebook; and the first parameter and the second parameter are either predefined or configured by a high-layer parameter.

6. The method of claim 1, wherein determining the PUCCH power control parameter based on the configuration of the terminal and the codebook included in the PUCCH, comprises:

in a case that the configuration of the terminal comprises SPS delay, and the PUCCH only comprises an SPS delay codebook, determining the PUCCH power control parameter based on a number of bits in the SPS delay codebook; or in a case that the configuration of the terminal comprises SPS delay, and the PUCCH comprises both an SPS delay codebook and an initial transmission codebook, determining the PUCCH power control parameter based on the initial transmission codebook.

7. The method of claim 1, wherein determining the PUCCH power control parameter based on the configuration of the terminal and the codebook included in the PUCCH, comprises:

in a case that the configuration of the terminal comprises HARQ-ACK retransmission, and the PUCCH only comprises an HARQ-ACK retransmission codebook, determining the PUCCH power control parameter based on the HARQ-ACK retransmission codebook or a number of bits in the HARQ-ACK retransmission codebook; or

in a case that the configuration of the terminal comprises HARQ-ACK retransmission, and the PUCCH comprises both an HARQ-ACK retransmission codebook and an initial transmission codebook, determining the PUCCH power control parameter based on the initial transmission codebook.

8. The method of claim 1, wherein determining the PUCCH power control parameter based on the configuration of the terminal and the codebook included in the PUCCH, comprises:

in a case that the configuration of the terminal comprises SPS delay and HARQ-ACK retransmission, and the PUCCH only comprises an SPS delay codebook, determining the PUCCH power control parameter based on a number of bits in the SPS delay codebook; or in a case that the configuration of the terminal comprises SPS delay and HARQ-ACK retransmission, and the PUCCH only comprises an HARQ-ACK retransmission codebook, determining the PUCCH power control parameter based on the HARQ-ACK retransmission codebook or a number of bits in the HARQ-ACK retransmission codebook.

9. The method of claim 1, wherein determining the PUCCH power control parameter based on the configuration of the terminal and the codebook included in the PUCCH, comprises:

in a case that the configuration of the terminal comprises SPS delay and HARQ-ACK retransmission, and the PUCCH comprises an HARQ-ACK retransmission codebook, an SPS delay codebook and an initial transmission codebook, determining the PUCCH power control parameter based on the initial transmission codebook; or, in a case that the configuration of the terminal comprises SPS delay and HARQ-ACK retransmission, and the PUCCH comprises an HARQ-ACK retransmission codebook, an SPS delay codebook and an initial transmission codebook, determining a first HARQ-ACK parameter based on the initial transmission codebook, determining a second HARQ-ACK parameter based on a number of bits in the SPS delay codebook, determining a third HARQ-ACK parameter based on the HARQ-ACK retransmission codebook or a number of bits in the HARQ-ACK retransmission codebook, and determining the PUCCH power control parameter based on the first HARQ-ACK parameter and at least one of the second HARQ-ACK parameter or the third HARQ-ACK parameter.

10. The method of claim 1, wherein determining the PUCCH power control parameter based on the configuration of the terminal and the codebook included in the PUCCH, comprises:

in a case that the configuration of the terminal comprises SPS delay and HARQ-ACK retransmission, and the PUCCH only comprises an SPS delay codebook and an initial transmission codebook, determining the PUCCH power control parameter based on the initial transmission codebook; or, in a case that the configuration of the terminal comprises SPS delay and HARQ-ACK retransmission, and the PUCCH only comprises an SPS delay codebook and an initial transmission codebook, determining a first HARQ-ACK parameter based on the initial transmission codebook, determining a second HARQ-ACK parameter based on a number of bits in the SPS delay codebook, and determining the PUCCH power control parameter based on the first HARQ-ACK parameter and the second HARQ-ACK parameter.

11. The method of claim 1, wherein determining the PUCCH power control parameter based on the configuration of the terminal and the codebook included in the PUCCH, comprises:

in a case that the configuration of the terminal comprises SPS delay and HARQ-ACK retransmission, and the PUCCH only comprises an HARQ-ACK retransmission codebook and an initial transmission codebook, determining the PUCCH power control parameter based on the initial transmission codebook; or, in a case that the configuration of the terminal comprises SPS delay and HARQ-ACK retransmission, and the PUCCH only comprises an HARQ-ACK retransmission codebook and an initial transmission codebook, determining a first HARQ-ACK parameter based on the initial transmission codebook, determining a third HARQ-ACK parameter based on the HARQ-ACK retransmission codebook or a number of bits in the HARQ-ACK retransmission codebook, and determining the PUCCH power control parameter based on the first HARQ-ACK parameter and the third HARQ-ACK parameter.

12. The method of claim 1, wherein determining the PUCCH power control parameter based on the configuration of the terminal and the codebook included in the PUCCH, comprises:

in a case that the configuration of the terminal comprises SPS delay and HARQ-ACK retransmission, and the PUCCH only comprises an HARQ-ACK retransmission codebook and an SPS delay codebook, determining the PUCCH power control parameter based on the HARQ-ACK retransmission codebook or a number of bits in the HARQ-ACK retransmission codebook; or,

in a case that the configuration of the terminal comprises SPS delay and HARQ-ACK retransmission, and the PUCCH only comprises an HARQ-ACK retransmission codebook and an SPS delay codebook, determining the PUCCH power control parameter based on a number of bits in the SPS delay codebook; or,

in a case that the configuration of the terminal comprises SPS delay and HARQ-ACK retransmission, and the PUCCH only comprises an HARQ-ACK retransmission codebook and an SPS delay codebook, determining a second HARQ-ACK parameter based on a number of bits in the SPS delay codebook, determining a third HARQ-ACK parameter based on the HARQ-ACK retransmission codebook or a number of bits in the HARQ-ACK retransmission codebook, and determining the PUCCH power control parameter based on the second HARQ-ACK parameter and the third HARQ-ACK parameter.

13. A physical uplink control channel (PUCCH) power control parameter determination device, comprising:

a memory, configured to store a computer program;

a transceiver, configured to transmit and receive data under the control of a processor; and

the processor, configured to read the computer program from the memory and perform the following operation:

determining a PUCCH power control parameter based on a configuration of a terminal and a codebook included in a PUCCH, wherein the PUCCH power control parameter is used to determine a power of the PUCCH.

14. The device of claim 13, wherein the processor is further configured to:

in a case that the configuration of the terminal comprises semi-persistent scheduling (SPS) delay, determine the PUCCH power control parameter based on a first hybrid automatic repeat request-acknowledgement (HARQ-ACK) parameter and a second HARQ-ACK parameter;

wherein in a case that the PUCCH comprises an initial transmission codebook, the first HARQ-ACK parameter is determined based on the initial transmission codebook; and in a case that the PUCCH does not comprise the initial transmission codebook, the first HARQ-ACK parameter is a first fixed value; and

in a case that the PUCCH comprises an SPS delay codebook, the second HARQ-ACK parameter is determined based on a number of bits in the SPS delay codebook; and in a case that the PUCCH does not comprise the SPS delay codebook, the second HARQ-ACK parameter is a second fixed value.

15. The device of claim 13, wherein the processor is further configured to:

in a case that the configuration of the terminal comprises HARQ-ACK retransmission, determine the PUCCH power control parameter based on a first HARQ-ACK parameter and a third HARQ-ACK parameter;

wherein in a case that the PUCCH comprises an initial transmission codebook, the first HARQ-ACK parameter is determined based on the initial transmission codebook; and in a case that the PUCCH does not comprise the initial transmission codebook, the first HARQ-ACK parameter is a first fixed value; and

in a case that the PUCCH comprises an HARQ-ACK retransmission codebook, the third HARQ-ACK parameter is determined based on the HARQ-ACK retransmission codebook or a number of bits in the HARQ-ACK retransmission codebook; and in a case that the PUCCH does not comprise the HARQ-ACK retransmission codebook, the third HARQ-ACK parameter is a third fixed value.

16. The device of claim 13, wherein the processor is further configured to:

in a case that the configuration of the terminal comprises SPS delay and HARQ-ACK retransmission, determine the PUCCH power control parameter based on a first HARQ-ACK parameter, a second HARQ-ACK parameter and a third HARQ-ACK parameter;

wherein in a case that the PUCCH comprises an initial transmission codebook, the first HARQ-ACK parameter is determined based on the initial transmission codebook; and in a case that the PUCCH does not comprise the initial transmission codebook, the first HARQ-ACK parameter is a first fixed value;

in a case that the PUCCH comprises an SPS delay codebook, the second HARQ-ACK parameter is determined based on a number of bits in the SPS delay codebook; and in a case that the PUCCH does not comprise the SPS delay codebook, the second HARQ-ACK parameter is a second fixed value; and

in a case that the PUCCH comprises an HARQ-ACK retransmission codebook, the third HARQ-ACK parameter is determined based on the HARQ-ACK retransmission codebook or a number of bits in the HARQ-ACK retransmission codebook; and in a case that the PUCCH does not comprise the HARQ-ACK retransmission codebook, the third HARQ-ACK parameter is a third fixed value.

17. The device of claim 13, wherein the processor is further configured to:

in a case that the configuration of the terminal comprises SPS delay and HARQ-ACK retransmission, determine the PUCCH power control parameter based on a first HARQ-ACK parameter, a number of bits in an HARQ-ACK retransmission codebook, a number of bits in an SPS delay codebook, a first parameter and a second parameter; wherein in a case that the PUCCH comprises an initial transmission codebook, the first HARQ-ACK parameter is determined based on the initial transmission codebook; and
the first parameter and the second parameter are either predefined or configured by a high-layer parameter.

18. The device of claim 13, wherein the processor is further configured to:

in a case that the configuration of the terminal comprises SPS delay, and the PUCCH only comprises an SPS delay codebook, determine the PUCCH power control parameter based on a number of bits in the SPS delay codebook; or
in a case that the configuration of the terminal comprises SPS delay, and the PUCCH comprises both an SPS delay codebook and an initial transmission codebook, determine the PUCCH power control parameter based on the initial transmission codebook.

19. The device of claim 13, wherein the processor is further configured to:

in a case that the configuration of the terminal comprises HARQ-ACK retransmission, and the PUCCH only comprises an HARQ-ACK retransmission codebook, determine the PUCCH power control parameter based on the HARQ-ACK retransmission codebook or a number of bits in the HARQ-ACK retransmission codebook; or
in a case that the configuration of the terminal comprises HARQ-ACK retransmission, and the PUCCH comprises both an HARQ-ACK retransmission codebook and an initial transmission codebook, determine the PUCCH power control parameter based on the initial transmission codebook.

20. The device of claim 13, wherein the processor is further configured to:

in a case that the configuration of the terminal comprises SPS delay and HARQ-ACK retransmission, and the PUCCH only comprises an SPS delay codebook, determine the PUCCH power control parameter based on a number of bits in the SPS delay codebook; or
in a case that the configuration of the terminal comprises SPS delay and HARQ-ACK retransmission, and the PUCCH only comprises an HARQ-ACK retransmission codebook, determine the PUCCH power control parameter based on the HARQ-ACK retransmission codebook or a number of bits in the HARQ-ACK retransmission codebook.

21. The device of claim 13, wherein the processor is further configured to:

in a case that the configuration of the terminal comprises SPS delay and HARQ-ACK retransmission, and the PUCCH comprises an HARQ-ACK retransmission codebook, an SPS delay codebook and an initial transmission codebook, determine the PUCCH power control parameter based on the initial transmission codebook; or,
in a case that the configuration of the terminal comprises SPS delay and HARQ-ACK retransmission, and the PUCCH comprises an HARQ-ACK retransmission codebook, an SPS delay codebook and an initial transmission codebook, determine a first HARQ-ACK parameter based on the initial transmission codebook, determine a second HARQ-ACK parameter based on a number of bits in the SPS delay codebook, determine a third HARQ-ACK parameter based on the HARQ-ACK retransmission codebook or a number of bits in the HARQ-ACK retransmission codebook, and determine the PUCCH power control parameter based on the first HARQ-ACK parameter and at least one of the second HARQ-ACK parameter or the third HARQ-ACK parameter.

22. The device of claim 13, wherein the processor is further configured to:

in a case that the configuration of the terminal comprises SPS delay and HARQ-ACK retransmission, and the PUCCH only comprises an SPS delay codebook and an initial transmission codebook, determine the PUCCH power control parameter based on the initial transmission codebook; or,

in a case that the configuration of the terminal comprises SPS delay and HARQ-ACK retransmission, and the PUCCH only comprises an SPS delay codebook and an initial transmission codebook, determine a first HARQ-ACK parameter based on the initial transmission codebook, determine a second HARQ-ACK parameter based on a number of bits in the SPS delay codebook, and determine the PUCCH power control parameter based on the first HARQ-ACK parameter and the second HARQ-ACK parameter.

23. The device of claim 13, wherein the processor is further configured to:

in a case that the configuration of the terminal comprises SPS delay and HARQ-ACK retransmission, and the PUCCH only comprises an HARQ-ACK retransmission codebook and an initial transmission codebook, determine the PUCCH power control parameter based on the initial transmission codebook; or,
in a case that the configuration of the terminal comprises SPS delay and HARQ-ACK retransmission, and the PUCCH only comprises an HARQ-ACK retransmission codebook and an initial transmission codebook, determine a first HARQ-ACK parameter based on the initial transmission codebook, determine a third HARQ-ACK parameter based on the HARQ-ACK retransmission codebook or a number of bits in the HARQ-ACK retransmission codebook, and determine the PUCCH power control parameter based on the first HARQ-ACK parameter and the third HARQ-ACK parameter.

24. The device of claim 13, wherein the processor is further configured to:

in a case that the configuration of the terminal comprises SPS delay and HARQ-ACK retransmission, and the PUCCH only comprises an HARQ-ACK retransmission codebook and an SPS delay codebook, determine the PUCCH power control parameter based on the HARQ-ACK retransmission codebook or a number of bits in the HARQ-ACK retransmission codebook; or,
in a case that the configuration of the terminal comprises SPS delay and HARQ-ACK retransmission, and the PUCCH only comprises an HARQ-ACK retransmission codebook and an SPS delay codebook, determine the PUCCH power control parameter based on a number of bits in the SPS delay codebook; or,
in a case that the configuration of the terminal comprises SPS delay and HARQ-ACK retransmission, and the PUCCH only comprises an HARQ-ACK retransmission codebook and an SPS delay codebook, determine a second HARQ-ACK parameter based on a number of bits in the SPS delay codebook, determine a third HARQ-ACK parameter based on the HARQ-ACK retransmission codebook or a number of bits in the HARQ-ACK retransmission codebook, and determine the PUCCH power control parameter based on the second HARQ-ACK parameter and the third HARQ-ACK parameter.

25. A physical uplink control channel (PUCCH) power control parameter determination apparatus, comprising:
a determining module, configured to determine a PUCCH power control parameter based on a configuration of a terminal and a codebook included in a PUCCH, wherein the PUCCH power control parameter is used to determine a power of the PUCCH.

26. A processor-readable storage medium, wherein the processor-readable storage medium stores a computer program, and the computer program is used to cause a processor to implement the method according to any one of claims 1-12.

determine a PUCCH power control parameter based on a configuration of a terminal and a codebook included in a PUCCH, in which the PUCCH power control parameter is used to determine a power of the PUCCH     101

FIG. 1

in a case that a configuration of a terminal includes SPS delay, determine a PUCCH power control parameter based on a first HARQ-ACK parameter and a second HARQ-ACK parameter     201

FIG. 2

in a case that the configuration of the terminal includes SPS delay, and a PUCCH only includes an SPS delay codebook, determine a PUCCH power control parameter based on a number of bits in the SPS delay codebook     301

in a case that the configuration of the terminal includes SPS delay, and the PUCCH includes both the SPS delay codebook and an initial transmission codebook, determine the PUCCH power control parameter based on the initial transmission codebook     302

FIG. 3

in a case that a configuration of a terminal includes HARQ-ACK retransmission, determine a PUCCH power control parameter based on a first HARQ-ACK parameter and a third HARQ-ACK parameter     401

FIG. 4

in a case that the configuration of the terminal includes HARQ-ACK retransmission, and a PUCCH only includes an HARQ-ACK retransmission codebook, determine a PUCCH power control parameter based on the HARQ-ACK retransmission codebook or a number of bits in the HARQ-ACK retransmission codebook

501

in a case that the configuration of the terminal includes HARQ-ACK retransmission, and the PUCCH includes both the HARQ-ACK retransmission codebook and an initial transmission codebook, determine the PUCCH power control parameter based on the initial transmission codebook

502

FIG. 5

in a case that a configuration of a terminal includes SPS delay and HARQ-ACK retransmission, determine a PUCCH power control parameter based on a first HARQ-ACK parameter, a second HARQ-ACK parameter and a third HARQ-ACK parameter

601

FIG. 6

in a case that the configuration of the terminal includes SPS delay and HARQ-ACK retransmission, determine a PUCCH power control parameter based on a first HARQ-ACK parameter, a number of bits in an HARQ-ACK retransmission codebook, a number of bits in an SPS delay codebook, a first parameter and a second parameter

701

FIG. 7

in a case that the configuration of the terminal includes SPS delay and HARQ-ACK retransmission, and the PUCCH only includes the SPS delay codebook, determine a PUCCH power control parameter based on a number of bits in the SPS delay codebook

801

in a case that the configuration of the terminal includes SPS delay and HARQ-ACK retransmission, and the PUCCH only includes an HARQ-ACK retransmission codebook, determine the PUCCH power control parameter based on the HARQ-ACK retransmission codebook or a number of bits in the HARQ-ACK retransmission codebook

802

FIG. 8

in a case that the configuration of the terminal includes SPS delay and HARQ-ACK retransmission, and the PUCCH includes an HARQ-ACK retransmission codebook, an SPS delay codebook and an initial transmission codebook, determine a PUCCH power control parameter based on the initial transmission codebook ⎯ 901

in the case that the configuration of the terminal includes SPS delay and HARQ-ACK retransmission, and the PUCCH includes the HARQ-ACK retransmission codebook, the SPS delay codebook and the initial transmission codebook, determine a first HARQ-ACK parameter based on the initial transmission codebook, determine a second HARQ-ACK parameter based on a number of bits in the SPS delay codebook, determine a third HARQ-ACK parameter based on the HARQ-ACK retransmission codebook or a number of bits in the HARQ-ACK retransmission codebook, and determine the PUCCH power control parameter based on the first HARQ-ACK parameter and at least one of the second HARQ-ACK parameter or the third HARQ-ACK parameter ⎯ 902

FIG. 9

in a case that the configuration of the terminal includes SPS delay and HARQ-ACK retransmission, and the PUCCH only includes the SPS delay codebook and the initial transmission codebook, determine a PUCCH power control parameter based on the initial transmission codebook ⎯ 1001

in the case that the configuration of the terminal includes SPS delay and HARQ-ACK retransmission, and the PUCCH only includes the SPS delay codebook and the initial transmission codebook, determine a first HARQ-ACK parameter based on the initial transmission codebook, determine a second HARQ-ACK parameter based on a number of bits in the SPS delay codebook, and determine the PUCCH power control parameter based on the first HARQ-ACK parameter and the second HARQ-ACK parameter ⎯ 1002

FIG. 10

in a case that the configuration of the terminal includes SPS delay and HARQ-ACK retransmission, and the PUCCH only includes the HARQ-ACK retransmission codebook and the initial transmission codebook, determine a PUCCH power control parameter based on the initial transmission codebook ⎯ 1101

in the case that the configuration of the terminal includes SPS delay and HARQ-ACK retransmission, and the PUCCH only includes the HARQ-ACK retransmission codebook and the initial transmission codebook, determine a first HARQ-ACK parameter based on the initial transmission codebook, determine a third HARQ-ACK parameter based on the HARQ-ACK retransmission codebook or a number of bits in the HARQ-ACK retransmission codebook, and determine the PUCCH power control parameter based on the first HARQ-ACK parameter and the third HARQ-ACK parameter ⎯ 1102

FIG. 11

in a case that the configuration of the terminal includes SPS delay and HARQ-ACK retransmission, and the PUCCH only includes the HARQ-ACK retransmission codebook and an SPS delay codebook, determine a PUCCH power control parameter based on the HARQ-ACK retransmission codebook or a number of bits in the HARQ-ACK retransmission codebook — 1201

in the case that the configuration of the terminal includes SPS delay and HARQ-ACK retransmission, and the PUCCH only includes the HARQ-ACK retransmission codebook and the SPS delay codebook, determine the PUCCH power control parameter based on a number of bits in the SPS delay codebook — 1202

in the case that the configuration of the terminal includes SPS delay and HARQ-ACK retransmission, and the PUCCH only includes the HARQ-ACK retransmission codebook and the SPS delay codebook, determine a second HARQ-ACK parameter based on a number of bits in the SPS delay codebook, determine a third HARQ-ACK parameter based on the HARQ-ACK retransmission codebook or a number of bits in the HARQ-ACK retransmission codebook, and determine the PUCCH power control parameter based on the second HARQ-ACK parameter and the third HARQ-ACK parameter — 1203

FIG. 12

1330 Processor

1310 Memory

Bus interface

1320 Transceiver

1340 User interface

FIG. 13

PUCCH power control parameter determination apparatus

determining module 1410

FIG. 14

## INTERNATIONAL SEARCH REPORT

| | International application No. |
|---|---|
| | **PCT/CN2024/095550** |

**A. CLASSIFICATION OF SUBJECT MATTER**

H04W72/04(2023.01)i; H04L1/18(2023.01)i

According to International Patent Classification (IPC) or to both national classification and IPC

**B. FIELDS SEARCHED**

Minimum documentation searched (classification system followed by classification symbols)

IPC:H04W,H04L

Documentation searched other than minimum documentation to the extent that such documents are included in the fields searched

Electronic data base consulted during the international search (name of data base and, where practicable, search terms used)

CNTXT, ENTXT, VEN, CJFD, 3GPP: 上行, 控制信道, 功率, 控制, 重传, 反馈, 半持续, 码本, 比特, 数量, HARQ, ACK, SPS, PUCCH, re-transmit, codebook, power, bit, number

**C. DOCUMENTS CONSIDERED TO BE RELEVANT**

| Category* | Citation of document, with indication, where appropriate, of the relevant passages | Relevant to claim No. |
|---|---|---|
| X | US 2022039029 A1 (SAMSUNG ELECTRONICS CO., LTD.) 03 February 2022 (2022-02-03) see claims 1-20, and description, paragraphs 49-235 | 1, 6, 7, 13, 18, 19, 25, 26 |
| Y | US 2022039029 A1 (SAMSUNG ELECTRONICS CO., LTD.) 03 February 2022 (2022-02-03) see claims 1-20, and description, paragraphs 49-235 | 8-12, 20-24 |
| X | US 2023042048 A1 (ELECTRONICS AND TELECOMMUNICATIONS RESEARCH INSTITUTE) 09 February 2023 (2023-02-09) see description, paragraphs 400-652 | 1, 5, 13, 17, 25, 26 |
| Y | US 2023042048 A1 (ELECTRONICS AND TELECOMMUNICATIONS RESEARCH INSTITUTE) 09 February 2023 (2023-02-09) see description, paragraphs 400-652 | 8-12, 20-24 |
| X | US 2022039088 A1 (SAMSUNG ELECTRONICS CO., LTD.) 03 February 2022 (2022-02-03) see description, paragraphs 323-420 | 1, 6, 7, 13, 18, 19, 25, 26 |

☑ Further documents are listed in the continuation of Box C.　　☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **02 September 2024** | **03 September 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**EP 4 761 402 A1**

## INTERNATIONAL SEARCH REPORT

| International application No. |
| --- |
| **PCT/CN2024/095550** |

### C.    DOCUMENTS CONSIDERED TO BE RELEVANT

| Category* | Citation of document, with indication, where appropriate, of the relevant passages | Relevant to claim No. |
| --- | --- | --- |
| Y | US 2022039088 A1 (SAMSUNG ELECTRONICS CO., LTD.) 03 February 2022 (2022-02-03) <br>     see description, paragraphs 323-420 | 8-12, 20-24 |
| A | US 2022256572 A1 (ELECTRONICS AND TELECOMMUNICATIONS RESEARCH INSTITUTE) 11 August 2022 (2022-08-11) <br>     entire document | 1-26 |
| A | US 2022377813 A1 (SAMSUNG ELECTRONICS CO., LTD.) 24 November 2022 (2022-11-24) <br>     entire document | 1-26 |

Form PCT/ISA/210 (second sheet) (July 2022)

## INTERNATIONAL SEARCH REPORT
### Information on patent family members

International application No.

**PCT/CN2024/095550**

| Patent document cited in search report | | | Publication date (day/month/year) | Patent family member(s) | | | Publication date (day/month/year) |
|---|---|---|---|---|---|---|---|
| US | 2022039029 | A1 | 03 February 2022 | EP | 4176669 | A1 | 10 May 2023 |
| | | | | EP | 4176669 | A4 | 03 January 2024 |
| | | | | US | 2023156623 | A1 | 18 May 2023 |
| | | | | US | 11882528 | B2 | 23 January 2024 |
| | | | | US | 11558825 | B2 | 17 January 2023 |
| | | | | WO | 2022030951 | A1 | 10 February 2022 |
| | | | | US | 2024172130 | A1 | 23 May 2024 |
| | | | | KR | 20230044431 | A | 04 April 2023 |
| US | 2023042048 | A1 | 09 February 2023 | None | | | |
| US | 2022039088 | A1 | 03 February 2022 | KR | 20230047409 | A | 07 April 2023 |
| | | | | JP | 2023537347 | A | 31 August 2023 |
| | | | | WO | 2022030920 | A1 | 10 February 2022 |
| | | | | EP | 4190100 | A1 | 07 June 2023 |
| | | | | EP | 4190100 | A4 | 24 January 2024 |
| US | 2022256572 | A1 | 11 August 2022 | None | | | |
| US | 2022377813 | A1 | 24 November 2022 | KR | 20220071198 | A | 31 May 2022 |
| | | | | EP | 4022815 | A1 | 06 July 2022 |
| | | | | EP | 4022815 | A4 | 19 October 2022 |
| | | | | WO | 2021060958 | A1 | 01 April 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311017318